(19) Europäisches Patentamt / European Patent Office / Office européen des brevets

(11) **EP 2 159 722 A1**

(12) **EUROPEAN PATENT APPLICATION**

(43) Date of publication:
**03.03.2010 Bulletin 2010/09**

(51) Int Cl.:
***G06F 17/30*** *(2006.01)*

(21) Application number: **09158095.1**

(22) Date of filing: **16.04.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **28.08.2008 JP 2008220559**

(71) Applicant: **Kabushiki Kaisha Toshiba
Minato-ku,
Tokyo 105-8001 (JP)**

(72) Inventors:
- **Tanaka, Sayoko
  Tokyo 105-8001 (JP)**
- **Yoneyama, Takahisa
  Tokyo 105-8001 (JP)**
- **Yoshihara, Hiroto
  Tokyo 105-8001 (JP)**

- **Yamauchi, Yasunobu
  Tokyo 105-8001 (JP)**
- **Mihara, Isao
  Tokyo 105-8001 (JP)**
- **Sekine, Masahiro
  Tokyo 105-8001 (JP)**
- **Higuchi, Yasukazu
  Tokyo 105-8001 (JP)**
- **Fujibayashi, Toshihiro
  Tokyo 105-8001 (JP)**
- **Kizuka, Yoshihisa
  Tokyo 105-8001 (JP)**
- **Saijo, Hitoshi
  Tokyo 105-8001 (JP)**
- **Miyazawa, Mieko
  Tokyo 105-8001 (JP)**

(74) Representative: **Henkel, Feiler & Hänzel
Patentanwälte
Maximiliansplatz 21
80333 München (DE)**

(54) **Display processing apparatus and display processing method**

(57) According to one embodiment, a display processing apparatus (100) includes: an operation receiver (101) configured to receive operation to select a first key content as a search key; a relation calculator (104) configured to calculate first relation between the first key content and each of other contents; and a display processor (106) configured to display first list information including first display information at a predetermined position and other display information at positions corresponding to the first relation. The relation calculator (104) calculates second relation between a second key content and each of other contents when the first display information is updated by second display information. The display processor (106) displays second list information including the other display information at positions corresponding to the second relation.

FIG.6

EP 2 159 722 A1

**Description**

BACKGROUND

1. Field

One embodiment of the invention relates to a display processing apparatus configured to display display information representing details of contents, and a display processing method.

2. Description of the Related Art

In recent years, with increased capability of AV equipment for storing contents and improved seamless accessibility of contents between equipment, let alone within the same equipment, or on a network, there has been a proliferation in the number of contents accessible to users. Accordingly, for example, Japanese Patent Application Publication (KOKAI) No. 2001-292383 discloses a conventional receiving device that allows users to select and view such contents.

With the conventional receiving device, in response to user selection of content from a list of contents, the content desired by the user is displayed. When the content selected by the user is stored in the device, the content is read and displayed on its data display module. On the other hand, when the content is present outside the device, the content is received from the outside and displayed on the data display module.

In audio-video equipments and the like, increase in storage capacity of storage media such as a HDD (hard disk drive) has been progressed, which result in a large number of targets in the storage medium to be selected by a user. In addition, when video and audio data (contents) on a network are to be included in targets to be displayed, the number of searchable contents becomes even much larger. Accordingly, while displaying a list of display information representing the contents, the displaying of the display information during repositioning of the display information upon user's selection of the display information becomes troublesome. As a result, it becomes difficult for the user to recognize the repositioning.

It is therefore an object of the invention to provide a display processing apparatus and a display processing method that can make a user to easily recognize repositioning of list information of display information representing details of contents.

SUMMARY OF THE INVENTION

To achieve the object mentioned above, according to an aspect of the invention, a display processing apparatus includes an operation receiver configured to receive operation to select a first key content as a search key; a relation calculator configured to calculate first relation between the first key content and each of other contents other than the first key content; and a display processor configured to display first list information including first display information of the first key content at a predetermined position and other display information of the each of the other contents other than the first key content at positions corresponding to the first relation. The relation calculator calculates second relation between a second key content and each of other contents other than the second key content when the first display information is updated by second display information of the second key content while the first list information being displayed by the display processor. The display processor displays second list information including the other display information of the other contents other than the second key content at positions corresponding to the second relation.

According to another aspect of the invention, a display processing method includes: receiving, by an operation receiver, operation to select a first key content as a search key; calculating, by a relation calculator, first relation between the first key content and each of other contents other than the first key content; and displaying, by a display processor, first list information including first display information of the first key content at a predetermined position and other display information of the each of the other contents other than the first key content at positions corresponding to the first relation. The calculating calculates second relation between a second key content and each of other contents other than the second key content when the first display information is updated by second display information of the second key content while the first list information being displayed by the displaying. The displaying displays second list information including the other display information of the other contents other than the second key content at positions corresponding to the second relation.

According to an aspect of the invention, each piece of display information of contents in list information is repositioned when display of key content is updated. Accordingly, content displayed as the list information can easily be recognized.

BRIEF DESCRIPTION OF THE SEVERAL VIEWS OF THE DRAWINGS

A general architecture that implements the various features of the invention will now be described with reference to the drawings. The drawings and the associated descriptions are provided to illustrate embodiments of the invention and not to limit the scope of the invention.
FIG. 1 is an exemplary block diagram of a display processing apparatus according to an embodiment of the invention;
FIG. 2 is an exemplary schematic diagram of metadata when a TV program is content in the embodiment;
FIG. 3A is an exemplary schematic diagram of display information representing the details of content in the embodiment;
FIG. 3B is another exemplary schematic diagram of display information representing the details of content in the embodiment;
FIG. 4A is an exemplary schematic diagram of a coordinate system of display information in the embodiment;
FIG. 4B is an exemplary schematic diagram of each area in the coordinate system of the display information in the embodiment;
FIG. 5 is an exemplary schematic diagram for explaining the operation of displaying the display information in the embodiment;
FIG. 6 is an exemplary schematic diagram for explaining relation in display information in the embodiment;
FIG. 7 is an exemplary schematic diagram of display information arranged in each region in the coordinate system in the embodiment;
FIG. 8 is an exemplary schematic diagram for explaining display size of display information in the embodiment;
FIG. 9 is an exemplary schematic diagram of display information C1 of key content and display information C11 and so on of other contents in the embodiment;
FIG. 10 is an exemplary schematic diagram of transition of a screen displayed by a display controller in the embodiment;
FIG. 11 is an exemplary flow chart of processing of displaying display information by a display processing apparatus in the embodiment;
FIG. 12A is an exemplary schematic diagram of the display information of the key content and the display information of other contents before scrolling in the embodiment;
FIG. 12B is a first exemplary schematic diagram of the display information of the key content and the display information of the other contents after the scrolling in the embodiment;
FIG. 12C is a second exemplary schematic diagram of the display information of the key content and the display information of the other contents after the scrolling in the embodiment;
FIG. 13 is a third exemplary schematic diagram of the display information of the key content and the display information of the other contents after the scrolling in the embodiment;
FIG. 14A is an exemplary schematic diagram illustrating a first direction indicating an initial display position of the display information C1 of the key content in the embodiment;
FIG. 14B is an exemplary schematic diagram illustrating a second direction indicating an initial display position of the display information C1 of the key content in the embodiment;
FIG. 15 is an exemplary schematic diagram of list information when the number of items within a displayable area is changed in the embodiment;
FIG. 16 is an exemplary flow chart of scrolling processing of the list information by the display processing apparatus 100 in the embodiment;
FIG. 17 is an exemplary schematic diagram of the list information containing the display information of the key content and the display information of the other contents when the list information is scrolled to the left in the embodiment;
FIG. 18 is another exemplary schematic diagram of the list information containing the display information of the key content and the display information of the other contents when the list information is scrolled to the left in the embodiment;
FIG. 19 is still another exemplary schematic diagram of the list information containing the display information of the key content and the display information of the other contents when the list information is scrolled to the left in the embodiment;
FIG. 20 is still another exemplary schematic diagram of the list information containing the display information of the key content and the display information of the other contents when the list information is scrolled to the left in the embodiment;
FIG. 21 is still another exemplary schematic diagram of the list information containing the display information of the key content and the display information of the other contents when the list information is scrolled to the left in the embodiment;

FIG. 22 is an exemplary schematic diagram for explaining the transition of the display information on the display screen of the list information in the embodiment;

FIG. 23 is an exemplary schematic diagram of the display screen on which the display information is moved in a display processing apparatus in the embodiment;

FIG. 24 is an exemplary schematic diagram of transition of display information on a display screen of list information according to a first modification;

FIG. 25 is an exemplary schematic diagram of the display screen on which display information is moved in a display processing apparatus according to the first modification;

FIG. 26 is an exemplary schematic diagram of transition of display information on a display screen of list information according to a second modification;

FIG. 27 is an exemplary schematic diagram of the display screen on which display information is moved in a display processing apparatus according to the second modification;

FIG. 28 is an exemplary schematic diagram of transition of display information on a display screen of list information according to a third modification;

FIG. 29 is an exemplary schematic diagram of the display screen on which display information is moved in a display processing apparatus according to the third modification;

FIG. 30 is an exemplary schematic diagram of transition of display information on a display screen of list information according to a fourth modification;

FIG. 31 is an exemplary schematic diagram of the display screen on which display information is moved in a display processing apparatus according to the fourth modification;

FIG. 32 is an exemplary schematic diagram of update of the display screen with a change in the key content in the embodiment;

FIG. 33 is an exemplary flow chart of the updating of the display screen by the display processing apparatus in the embodiment;

FIG. 34 is an exemplary schematic diagram of repositioning of the display information of other contents on the display screen upon detection of the change in the content in the embodiment; and

FIG. 35 is an exemplary flow chart of the repositioning of the display information of the other contents on the display screen upon detection of the change in content.

DETAILED DESCRIPTION

Various embodiments according to the invention will be described herein after with reference to the accompanying drawings.

Although, a display processing apparatus of the embodiments is described below as being applied to a television (TV), this is by way of example only and is not to be construed as limitation. The display processing apparatus may be applied to any display device capable of displaying video or the like. In the following embodiments, when a user retrieves content related to a key content as a search key from a plurality of contents, the display processing apparatus displays the key content with contents related to the key content in response to user's selection of the key content.

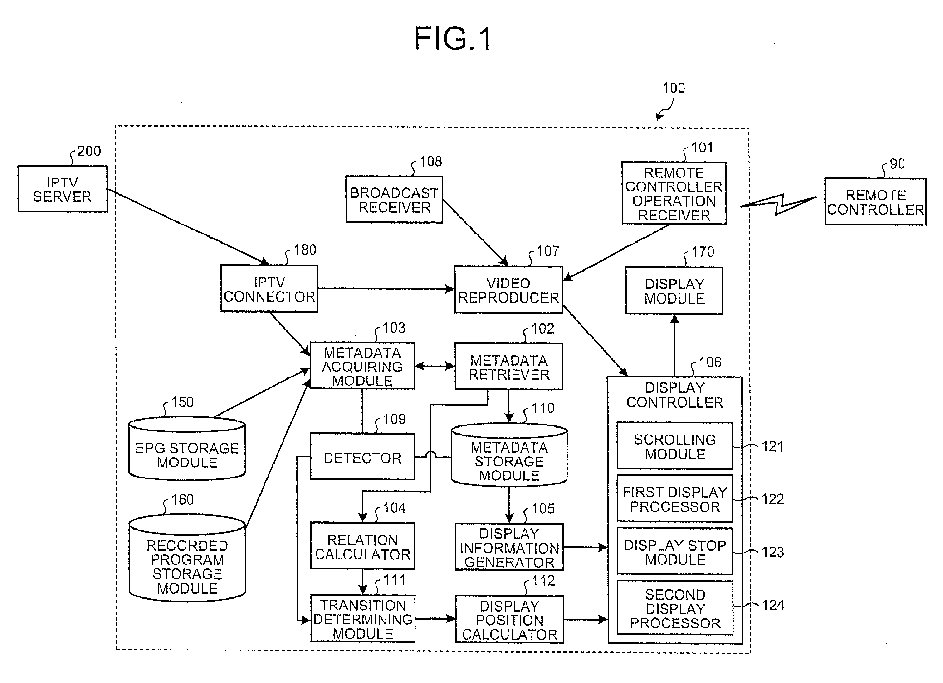

A display processing apparatus 100 is explained. FIG. 1 is an exemplary block diagram of the display processing apparatus 100 according to an embodiment. As shown in FIG. 1, the display processing apparatus 100 includes a display module 170, a broadcast receiver 108, a video reproducer 107, and an Internet protocol television (IPTV) connector 180. The IPTV connector 180 is connected to an IPTV server 200 through a network. Although not illustrated in the drawings, the display processing apparatus 100 further comprises a processor, such as ASIC or CPU, and a storage device. The storage device includes a ROM that stores a predetermined computer program for controlling the display processing apparatus 100 and a RAM that provides a work area for the processor. The cooperation of the processor and the computer program stored in the storage device implements functional modules including an electronic program guide (EPG) storage module 150, a recorded program storage module 160, a remote controller operation receiver 101, a metadata retriever 102, a metadata acquiring module 103, a relation calculator 104, a display information generator 105, a display controller 106, a detector 109, a metadata storage module 110, a transition determining module 111, and a display position calculator 112.

The IPTV server 200 provides services to distribute video such as TV programs and movies using IP. In response to a request from the display processing apparatus 100, the IPTV server 200 delivers thereto content such as the video and metadata of the content.

The IPTV connector 180 is an interface that connects the display processing apparatus 100 and the IPTV server 200.

The EPG storage module 150 is a storage medium such as HDD or memory for storing an electronic program guide obtained from a TV broadcast or an external server that manages and distributes the electronic program guide.

More specifically, the EPG storage module 150 obtains via a communication module (not illustrated) an electronic program guide for TV, CATV, CS broadcasting, BS broadcasting, and the like from a service provider server connected through a network such as the Internet, or receives via an antenna, cable, and the like the electronic program guide broadcasted through the TV broadcast, and stores the electronic program guide. It is assumed herein that the electronic program guide contains information on programs to be broadcasted within a period from the present time to a certain time in the future (e. g. , after one week) . The information on the programs stored in the EPG storage module 150 is periodically updated. In this case, pre-stored information might be updated.

The recorded program storage module 160 is a storage medium such as HDD or memory for storing content such as video. For example, if the display processing apparatus 100 is TV with HDD, the recorded program storage module 160 stores video of a recorded TV program as the content. Examples of the content include video in a digital versatile disk (DVD) and video captured by a video camera.

The recorded program storage module 160 also stores metadata related to the content in association therewith. The term "metadata" as used herein refers to a set of information indicating unique characteristics of the content. The unique characteristics include the title of the content and the broadcast date and time of the content. For example, if the content is a TV program, the metadata indicates information (program information) of the TV program such as the title, the channel/broadcast date and time, the cast, the brief description (subtitle), and the genre. This metadata is provided to the recorded program storage module 160 with the content and stored therein in association with the content.

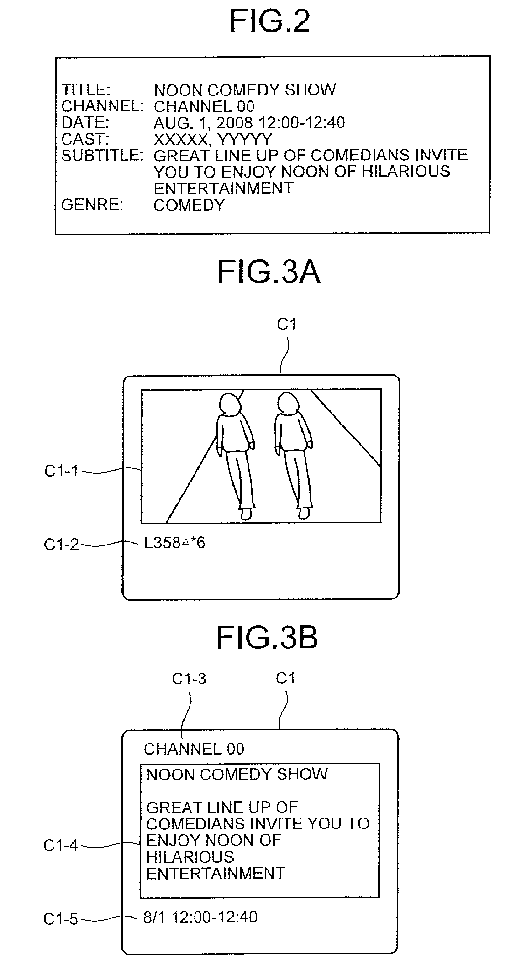

FIG. 2 illustrates the metadata when a TV program is the content. The metadata illustrated in FIG. 2 represents information related to the content of a recorded TV program. The information, such as the title of the TV program "Noon Comedy Show", the channel "00", the broadcast date and time "August 1, 2008, 12:00 - 12:40", the cast "xxxxx, yyyyy", the subtitle "Great line up of comedians invite you to enjoy a noon of hilarious entertainment", and the genre "comedy", is stored as metadata.

Although an example is described above in which the metadata is provided as being preset, this is by way of example and not of limitation. The recorded program storage module 160 may receive information provided by a user thorough an input device such as a remote controller 90 and store it as metadata in association with the content.

The display module 170 includes, for example, a liquid crystal display (LCD) for displaying text and an image, and displays content of a received TV program, stored content, an electronic program guide, and the like. The display module 170 also displays display information representing the details of the content generated by the display information generator 105, which will be described later, to allow a user to retrieve content (see FIGS. 3A and 3B).

The broadcast receiver 108 receives the content of video (TV program) broadcasted by TV broadcasting through an antenna or a cable (not illustrated).

The video reproducer 107 acquires the content of video that a user desires to reproduce. Examples of the content include the content of a TV program, etc., received by the broadcast receiver 108, the content of video acquired from the IPTV server 200 through the IPTV connector 180, and the content of video stored in the recorded program storage module 160. The video reproducer 107 decodes (reproduces) the content thus acquired, and outputs it to the display controller 106.

The remote controller operation receiver 101 receives user's operation. More specifically, when a user presses an operation button of the remote controller 90, the remote controller operation receiver 101 recognizes the event. For example, when a user retrieves desired content as well as contents related to the desired content from a plurality of contents, the user operates an operation button of the remote controller 90 to select content (key content) as a search key from a plurality of contents of the electronic program guide displayed on the display module 170. The remote controller operation receiver 101 determines this key content as the search key, as well as receives this selection operation, i.e., an instruction to retrieve contents. That is to say, the remote controller operation receiver 101 functions as a specifying module configured to specify the key content. The specifying of the key content is not limited to the selection of the key content by the user. That is to say, the key content may be specified on system side.

Further, a content being reproduced may be specified as the key content. In this case, when the user presses the operation button provided on the remote controller 90 during the content reproduction, the remote controller operation receiver 101 receives a selection operation so as to adopt the content being reproduced as the key content, i.e., receives an operation of retrieving contents.

As will be described in details, the remote controller operation receiver 101 receives an instruction for the display information of contents which have drawn attention (target content) in list information including display information of a plurality of contents displayed on the display module 170.

The metadata acquiring module 103 acquires, when the remote controller operation receiver 101 receives selection operation for the key content, meta data of all contents (the key content and other contents other than the key content). More specifically, for example, the metadata acquiring module 103 acquires the metadata of the contents from the recorded program storage module 160. The metadata acquiring module 103 may request the IPTV server 200 for the metadata of the contents and acquire the metadata. The metadata acquiring module 103 may also acquire the metadata of the contents from the electronic program guide stored in the EPG storage module 150.

The metadata retriever 102 retrieves, when the remote controller operation receiver 101 receives selection operation for the key content, metadata of the key content from the metadata of the contents acquired by the metadata acquiring module 103. The metadata retriever 102 then outputs the metadata of the key content to the relation calculator 104.

The metadata retriever 102 also retrieves, based on the metadata of the key content acquired from the metadata acquiring module 103, metadata of other contents so that the relation between each of the other contents and the key contents is to be calculated by the relation calculator 104. The metadata retriever 102 then outputs the metadata of the other contents to the relation calculator 104.

The metadata retriever 102 further sends to the metadata storage module 110 the metadata of the key content retrieved by the metadata retriever 102 and the metadata of the other contents the relation of which are to be calculated.

The metadata retriever 102 also outputs through the metadata storage module 110, when the remote controller operation receiver 101 receives the selection operation for the key content, metadata of all the contents acquired by the metadata acquiring module 103 to the display information generator 105.

The metadata storage module 110 stores the metadata of the key content retrieved by the metadata retriever 102 and the metadata of the other contents the relation of which are to be calculated. That is to say, the metadata storage module 110 stores all the metadata of the contents which are to be displayed by the display controller 106 as display information. When the metadata of the programs stored in the EPG storage module 150 or the metadata received from the IPTV connector 180 is changed, the metadata stored in the metadata storage module 110 are updated through the metadata acquiring module 103. This update can be detected by the detector 109 as described later.

The relation calculator 104 calculate the relation between the key content and the other contents based on the metadata of the key content and the metadata of the other contents received from the metadata retriever 102 for each item contained in the metadata. Examples of the item include title and channel. More specifically, the relation calculator 104 calculates relation RM using the following equation:

$$\texttt{relation RM} = \sum_{n-1}^{N} \texttt{fa}_n(\texttt{M11(n), M21(n)}) \times \texttt{wa}_n \qquad (1)$$

where N represents the total number of metadata items acquirable by the metadata acquiring module 103, M11 represents the metadata of the key content, M21 represents the metadata of the other contents, and (n) represents n-th metadata acquired by the metadata acquiring module 103. Further, $fa_n(M11(n), M21(n))$ is a function that returns the relation between metadata M11 (n) and M21 (n) as $RM_n$, and $Wa_n$ is a value (n = 1, ... , N) indicating weight.

As described above, although various types of information is acquired as the metadata, the metadata will be described below as including five items (N = 5), i.e., recoding date and time, title of content, channel, genre, and cast, for simplicity. The five items of the metadata will be described as n = 1, 2, ..., 5 in the above order.

The relation RM of the other contents with respect to the key content can be represented by the weighted linear sum of the following five relations $RM_1$ to $RM_5$:

$RM_1 = fa_1$(recoding date and time of metadata M11, recoding date and time of metadata M21)
$RM_2 = fa_2$(title of metadata M11, title of metadata M21)
$RM_3 = fa_3$(channel of metadata M11, channel of metadata M21)
$RM_4 = fa_4$(genre of metadata M11, genre of metadata M21)
$RM_5 = fa_5$(cast of metadata M11, cast of metadata M21)

For example, $fa_1$ is a function that is larger for more recent recoding date and time and is smaller for less recent recoding date and time. More specifically, $fa_1$ may be represented by using a relational expression as follows:

$$\texttt{MO1/|rec\_data (M11) - rec\_data (M21)|}$$

where rec_data (x) is a function that uniquely converts recoding date and time of x into an integer, MO1 is an arbitrary constant number, and |X| is a function indicating the size of X and is typically an absolute value. Specifically, rec_data (x) is a function that converts the recoding date and time into an integer such as seconds having elapsed from a reference date and time determined as 0.

While an example is described above in which a function g represented as g(x) = MO1/|X| is applied to $fa_1$ (M11, M21) = g(rec_data (M11) - rec_data (M21)), it is not so limited. The function g may be a function with L2 norm as, for example, g(x) = MO1/||x||. In this case, ||x|| is the square root of the sum of squares of the difference between elements that constitute x.

Other functions such as a sigmoid function and a gamma function may be applied to g(x). Besides, while an example is described above in which the function is larger as the recoding date and time of the metadata M11 and M21 is more recent, it is not so limited. The function may be smaller as the recoding date and time of the metadata is more recent. Further, the function g may be large when a specific condition is satisfied.

For example, $fa_2$ is a function that is larger as more of the same letters or characters are contained in the character strings of the titles of the respective metadata M11 and M21. More specifically, if the title of the metadata M11 is "ABCDE" and that of the metadata M11 is "FGCDH", two letters "CD" are contained in both the titles. If the title of the metadata M11 is "ABCDE" and that of the metadata M11 is "FGHIE", one letter is contained in both the titles. Therefore, the value of $fa_2$ is larger in the former case. The relation may be determined based on a keyword contained in the brief description (subtitle) of a program in the same manner as the title basis.

While an example is cited above in which the number of the same letters or characters contained in both the titles are simply compared, this is not intended as a limitation. Additional conditions may be used such as that the function is larger as more of the same letters or characters are contained in both the titles from the top, or that even if no same letter is present in both the titles, when the titles have a common idea, they are determined to be the same. As an example of the latter case, a Japanese word "yakyu" is regarded as the same as "baseball", and the titles that contain the words "yakyu" and "baseball", respectively, are determined to contain the same character string.

Besides, when the titles have the same main character string and different sub character strings, they are likely to be of contents of the same series. Accordingly, in such a case, the value of $fa_2$ may be set to large. Specifically, for example, "ABCDE#2" and "ABCDE#3" are likely to be the titles of different episodes of the same drama series. Therefore, in such a case, the value of $fa_2$ may be doubled. Note that the above is described by way of example only, and the comparison as described above may be accomplished with high accuracy by commonly known technologies such as approximate pattern matching and regular expression matching.

For example, $fa_3$ is a function that is large when the metadata M11 and M21 are of contents of the same channel. Simply, $fa_3$ may be a function that takes value MO2 when the metadata M11 and M21 are of contents of the same channel and otherwise takes value 0. The value MO2 is an arbitrary constant number. In addition, if the metadata M11 and M21 are of contents of affiliate channels, the value of $fa_3$ may be set to a different value. For example, $fa_3$ may be a function that returns value MO2/2 when the metadata M11 and M21 are of contents of affiliate channels. Further, $fa_3$ may be a function that returns value M02/4 if the metadata M11 and M21 are of contents of affiliate channels but of different broadcast media. Note that the above is described by way of example only, and $fa_3$ may be an arbitrary function.

For example, $fa_4$ is a function that is large when the metadata M11 and M21 are of contents of the same genre. More specifically, $fa_4$ may be a function that takes value MO3 if the metadata M11 and M21 both belong to the same genre "sports" and otherwise takes value 0. In addition, if the metadata M21 belongs to the subgenre of the metadata M11 such as, for example, if the metadata M11 belongs to the genre "sports" and the metadata M21 belongs to the genre "baseball", $fa_4$ may be a function that takes value MO3/2. Further, even if the metadata M11 and M21 do not directly belong to the same genre, when they can be categorized in the same genre such as, for example, when the metadata M11 belongs to the genre "baseball" while the metadata M21 belongs to the genre "football" and the both are categorized in sports, $fa_4$ may be a function that takes value MO3/4. Note that the above is described by way of example only, and $fa_4$ may be an arbitrary function.

For example, $fa_5$ is a similar function to $fa_4$. More specifically, if the metadata M11 is of the content featuring "WW, XX, YY" and the metadata M21 is of the content featuring "XX, YY, ZZ", then the same two persons are casted for both the contents. In such a case, $fa_5$ may be a function that takes value $2 \times MO4$ (MO4: an arbitrary constant number), and it may be a function that takes value 0 if there is no same person casted for both the contents. Besides, someone in the cast may be a member of a group. For example, if a person KK is a member of a group XX, and when the metadata M11 is of the content featuring "VV, WW, XX" and the metadata M21 is of the content featuring "KK, YY, ZZ", the person KK is casted in the content of M11 as a member of the group XX and also is casted in the content of M21. In such a case, $fa_5$ may be a function that returns value M04/2.

In a similar fashion, the relation between groups or between people featured in the contents may be defined. For example, when the groups XX and YY belong to the same office, $fa_5$ may be a function that returns value M04/4. In this case, the relation between groups or between people may be defined in the metadata or may be obtained from an external server (information site).

While an example is described above in which the relation is calculated not taking into account a person in the cast list, this is not so limited. The relation may further be weighted according to the order on the cast list. For example, the derived relation is left as it is with respect to the first person on the cast list for the metadata M11, while it is weighted by 1/2 with respect to the second person and similarly is weighted by 1/3 with respect to the third person. The order on the cast list for the metadata M21 may also be taken into account in addition to that for the metadata M11. For example, in comparison of the second person on the cast list for the metadata M11 with the third person on the cast list for the metadata M21, the relation may be weighted by 1/2 with respect to the second person for the metadata M11 and may further be weighted by 1/3 with respect to the third person for the metadata M21. That is, the relation may be weighted by 1/2x1/3 = 1/6. Besides, the relation may be weighted differently with respect to a star playing a leading role based on information on the cast or the like. For example, the derived relation may be double-weighted with respect to the star.

For each content, the transition determining module 111 determines a transition path of transition in animation from a display position before the transition to a display position after the transition, and the order of transition of display information of each of the contents, based on the relation between each of the contents and the key content calculated by the relation calculator 104. According to the embodiment, the transition of the display information of other contents other than the key content is started substantially simultaneously and completed substantially simultaneously.

According to the embodiment, the display position of the display information before the transition is predetermined for each display position of the display information after the transition. That is to say, when the display position of individual contents in the list displayed on a screen after the transition is determined based on the relation, then the display position before the transition in animation is also determined. Examples of the transition of the display information will be described later.

For each predetermined time during the transition of the display information in accordance with the transition path and the order of transition determined by the transition determining module 111, the display position calculator 112 calculates positional information of the each display information for each content. The display position is calculated from the start of the transition of first display information to the completion of the transition of all pieces of display information. The predetermined time according to the embodiment refers to a time interval during which the display screen is updated in animation.

The display information generator 105 generates display information representing the details of the key content and the other contents based on the metadata of the key content and that of the other contents output from the metadata retriever 102. More specifically, for example, based on the metadata of content of video data stored in the recorded program storage module 160, the display information generator 105 adds such items as a title to the representative image of the video data to generate display information to be displayed on the display module 170. Further, for example, based on the metadata of content of video data obtained from the IPTV server 200, the display information generator 105 adds such items as a title to the representative image of the video data to generate display information to be displayed on the display module 170. Still further, for example, based on the electronic program guide stored in the EPG storage module 150, the display information generator 105 generates display information to be displayed on the display module 170 to indicate the title of a TV program, the broadcast date and time, the channel, the brief description of the TV program, and the like.

The display information will now be described in detail. FIGS. 3A and 3B illustrate examples of the display information representing the details of content. FIG. 3A illustrates display information C1 of the key content generated based on, for example, the metadata of video data stored in the recorded program storage module 160. As illustrated in FIG. 3A, the display information C1 includes a representative image C1-1 of the content and title "L358Δ*6" C1-2 of the content (video). On the other hand, FIG. 3B illustrates the display information C1 of the key content generated based on, for example, the electronic program guide. As illustrated in FIG. 3B, the display information C1 includes the channel C1-3, title "Noon Comedy Show" with subtitle "Great line up of comedians invite you to enjoy a noon of hilarious entertainment" C1-4 of the content (video), and broadcast date and time C1-5.

As described above, when the remote controller operation receiver 101 receives an instruction from a user to retrieve content, the display controller 106 displays list information indicating display information of key content and that of other contents related to the key content.

In the list information (related content list), the display information of the key content is arranged in a desired position. With the position of the display information of the key content as the center, pieces of the display information of the other contents are arranged to form concentric polygons, for example, correspondingly to the directions of an operation button such as an arrow key on the remote controller 90. When generated, the list information is displayed on the display module 170. The screen is divided into predetermined areas for respective items in radial directions from the center. The pieces of the display information of the other contents are arranged in the predetermined areas such that the one with higher relation is closer to the center.

Specifically, the display controller 106 includes a scrolling module 121, a first display processor 122, a display stop module 123, and a second display processor 124, and performs processing of display on the display module 170. For example, the display controller 106 reproduces and displays the contents sent from the video reproducer 107 on the display module 170.

The first display processor 122 displays, for example, list information having a plurality of pieces of display information representing contents arranged thereon, and information of a program with contents described therein.

Upon the selection of contents or display information of the contents by the remote controller operation receiver 101, the display stop module 123 displays only the display information of the contents. Further, the display stop module 123 stops displaying, for example, other display information, a screen of a list, which has been displayed until that time, and the background.

After stop displaying the other display information, the screen of the list, the background, and the like, the second display processor 124 displays the list information. Here, the list information includes the selected display information and pieces of display information other than the selected display information. The selected list information is positioned at a central coordinate of the display area. The pieces of the display information are arranged at positions determined based on the relation between each of the pieces of the display information and the selected display information. The positions determined based on the relation are within the display area but other than the central coordinate.

According to this embodiment, the key content is positioned at the central coordinate of the display area. Alternatively, the key content may be placed in an area other than the central coordinate. For example, the key content may be placed at any predetermined position, which has been determined as a position where the key content is to be placed. For example, the key content may be placed on the uppermost part within the display area.

In displaying the list, the second display processor 124 displays each piece of other display information at display positions calculated by the display position calculator 112, for every predetermined time. Thus, the second display processor 124 displays the each piece of the display information in animation such that the each piece of the display information is displayed from the display position before the transition to the display position determined based on the relation, in accordance with the transition path and the order of transition determined by the transition determining module 111.

After the transition, the second display processor 124 displays the list information including the key content positioned at the central coordinate and the pieces of the other display information positioned in the order the relation to the key content descends.

Specifically, when the remote controller operation receiver 101 receives the operation from the user corresponding to the content retrieving, the aforementioned configuration of the display controller 106 can display the list information including the key content and other contents so that the user can retrieve the display information.

The list information displayed by the first display processor 122 and the second display processor 124 includes the display information of the key content and the pieces of the display information of the contents other than the key content.

The display information of the key content is positioned at a desired position. The pieces of the display information of other contents other than the key content are positioned on a plurality of polygons formed concentrically around the position of the display information of the key content. Further, the pieces of the display information of the other contents other than the key contents are positioned so as to conform with a direction of operation of an operation button provided in the remote controller 90 such as a cross-shaped key operation button, and positioned in predetermined areas divided for individual items from the center in a radial direction from a position near the center in the order the relation descends. The generated list information is displayed on the display module 170. In this list information, display size of the display information of the key content is the largest. Further, display size of the pieces of the display information of the other contents decreases as the distance thereof to the position near the center increases.

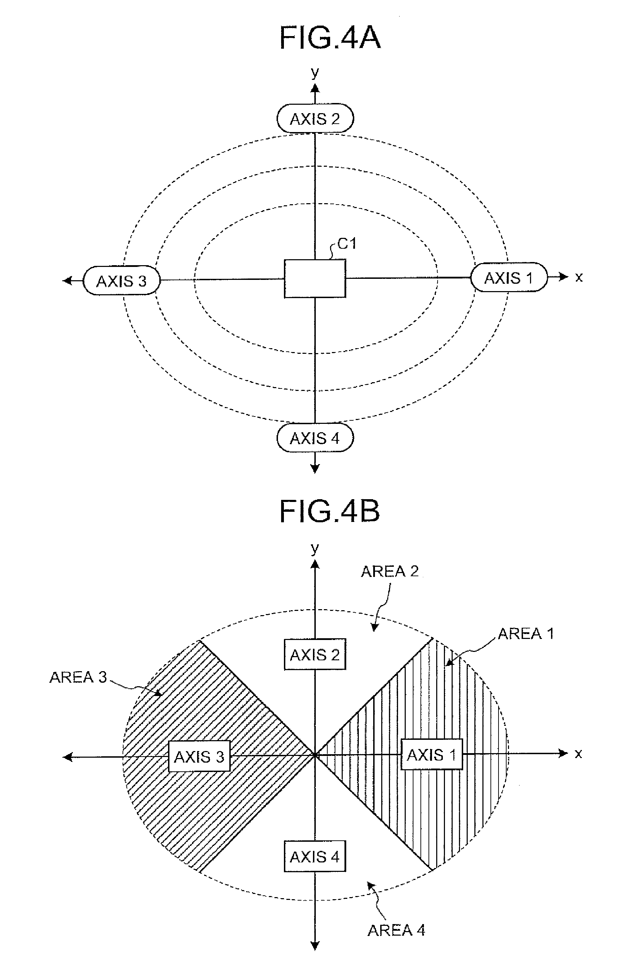

The displaying of the display information will be explained more in detail with reference to the accompanying drawings. FIGs. 4A to FIG. 8 are exemplary schematic diagrams for explaining the displaying of the display information. As illustrated in FIG. 4A, in the list information displayed by the first display processor 122 and the second display processor 124, the display information C1 of the key content is positioned at a desired position. Further, the list information sets, with the position of the display information C1 as the center, four axes (axis 1 to 4) in the positive x-axis direction, the positive y-axis direction, the negative x-axis direction, and the negative y-axis direction, respectively. Still further, in the list information, each item contained in the metadata of the selected key content to one of the four axes. Referring to FIG. 2, as items contained in the metadata, the "title" of a TV program (content), the "cast" of the TV program, a "keyword" for search contained in the brief description of the TV program, and the "genre" of the TV program are each assigned to one of the four axes. A user can use the items assigned to the axes as indices for searching contents related to the key content.

As illustrated in FIG. 4B, in the list information displayed by the first display processor 122 and the second display processor 124, the display area is divided into predetermined areas (area 1 to 4) in radial directions from the display information C1 in the center. The display area is divided at an arbitrary angle, for example, an angle of 90° such that each of the predetermined areas includes one of the axes assigned one of the items. In this manner, the display controller 106 generates the predetermined areas (area 1 to 4) each including one of the axes.

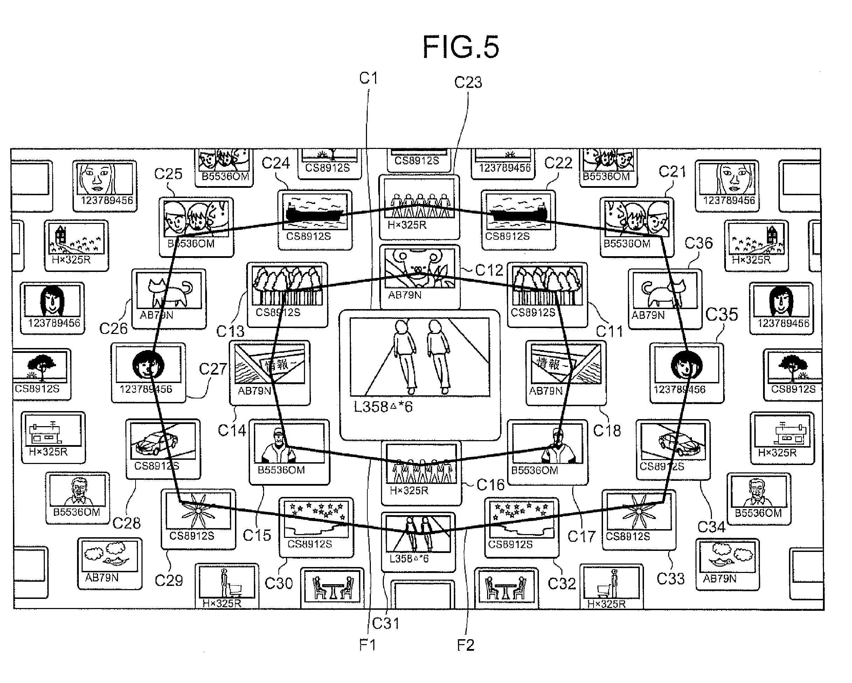

As illustrated in FIG. 5, in the list information displayed by the first display processor 122 and the second display processor 124, the pieces of the display information of other contents are positioned on a plurality of octagons F1, F2, ..., which are concentrically formed around the display information C1 of the key content as the center, correspondingly to up, down, left, and right directions of the operation button on the remote controller 90. More specifically, in the list information, eight pieces of display information C11 to C18 of other contents are positioned on the octagon F1. Further, there are positioned on the octagon F2 eight pieces of display information C21, C23, C25, C27, C29, C31, C33, and C35 of other contents, and also eight pieces of display information C22, C24, C26, C28, C30, C32, C34, and C36 of other contents between the respective pieces along the directions of the operation button. In the same manner as just described, there are positioned on each octagon eight pieces of display information of other contents, and also eight pieces of display information of other contents between the respective pieces. With this arrangement of display information of other contents, with respect to any piece of display information, other pieces of display information are arranged along the up, down, left, and right directions of the operation button.

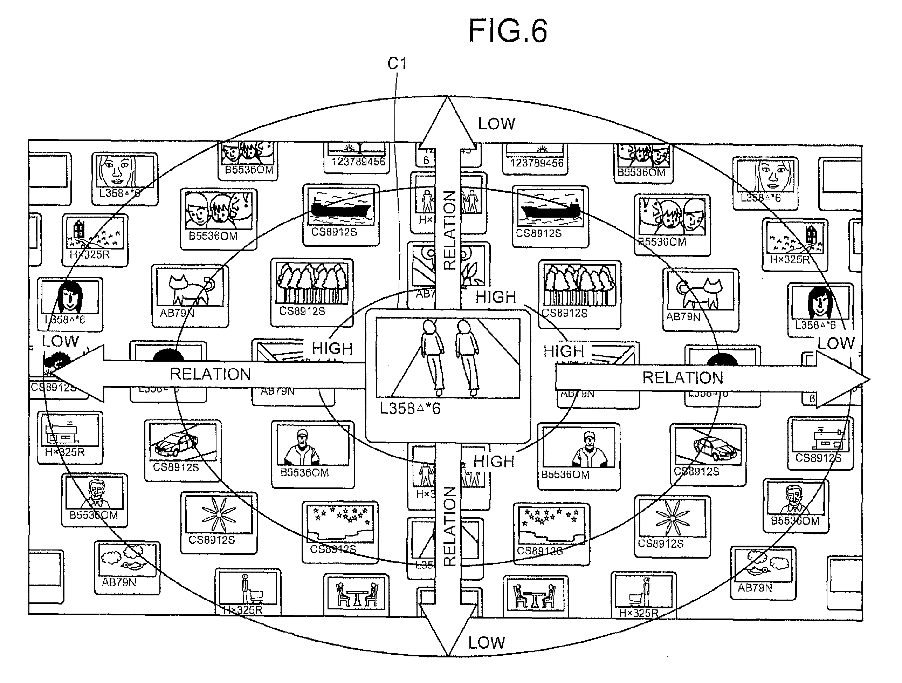

At this time, as illustrated in FIG. 6, the pieces of the display information of other contents with higher relation to the key content are positioned closer to the center at which is arranged the display information C1 of the key content. In other words, the pieces of display information of other contents with lower relation to the key content are arranged more distant from the center. That is, in the example of FIG. 5, the pieces of display information of other contents with the highest relation to the key content are positioned on the octagon F1. Also, the pieces of display information of other contents in descending order of relation to the key content are positioned on the octagon F2, and other octagons (not illustrated).

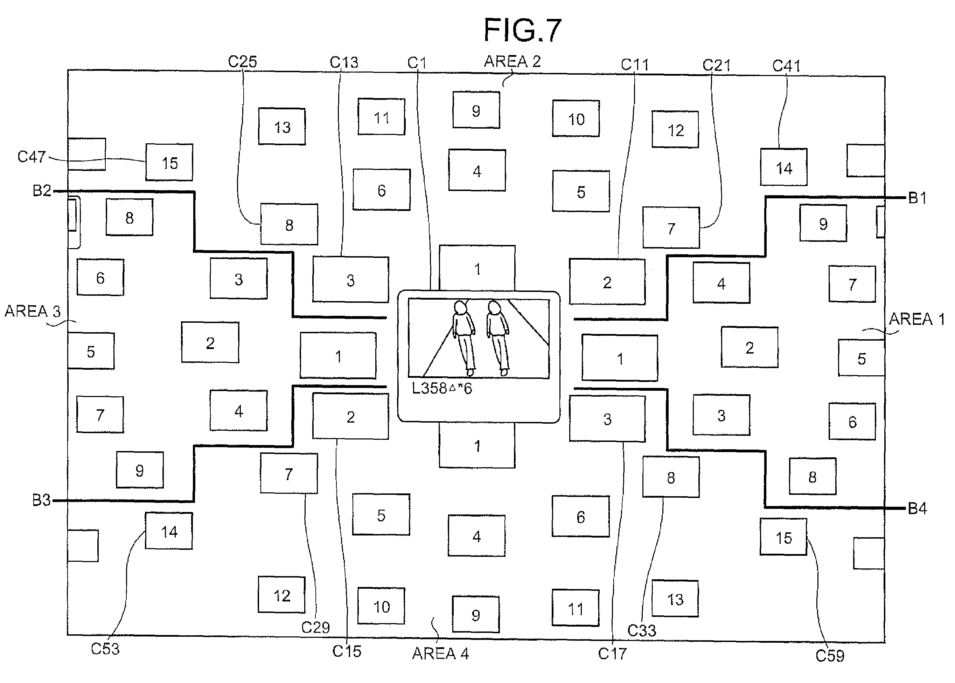

In addition, in the list information, the pieces of display information of other contents are positioned in descending order of relation to the key content in each of the predetermined areas previously obtained for each item. More specifically, as illustrated in FIG. 7, for respective items assigned to the area 1 defined by boundary lines B1 and B4, the area 2 defined by boundary lines B1 and B2, the area 3 defined by boundary lines B2 and B3, and the area 4 defined by boundary lines B3 and B4, the pieces of display information of other contents are positioned in the order of numbers assigned to the pieces. Thus, with respect to each of the items, the pieces of the display information of the other contents can be arranged from around the center in descending order of relation to the key content.

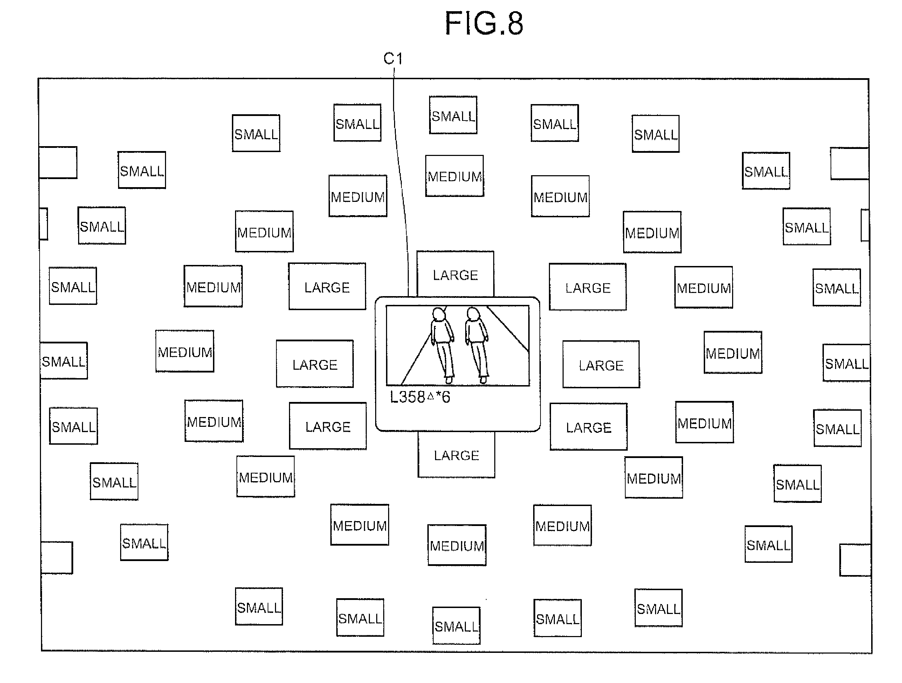

In the example of FIG. 7, pieces of the display information C11, C21 and C41 are located in positions capable of belonging to both the areas 1 and 2. For example, the pieces of the display information C11, C21 and C41 can be set to belong to either one of the areas or items in which more contents with relation to the key content higher than a predetermined threshold are present than in the other. In FIG. 8, since more other contents with relation higher than the predetermined threshold are present in the area 2 than in the area 1, the pieces of the display information C11, C21 and C41 belong to the area 2. The same is applied to pieces of the display information C13, C25, C47, C15, C29, C53, C17, C33, and C59.

While an area to which display information displayed near a boundary line belongs is described above as being determined based on the degree of relation to the key content, this is by way of example and not of limitation. For example, display information displayed near a boundary line may belong to an area having more contents related to the key content than the other.

Further, as illustrated in FIG. 8, in the list information, the display information of the key content is displayed in the largest size, and the display information of the other contents are displayed smaller as the distance from the center increases. Further, in the list information, when pieces of display information on other contents belong to a plurality of areas, these pieces of display information are displayed in any one of the areas. Specifically, when the pieces of display information of other contents belong to both the areas 1 and 2, the first display processor 122 and the second display processor 124 display the pieces of display information in one of the areas 1 and 2 to which an item having a higher relation to the key content is allocated.

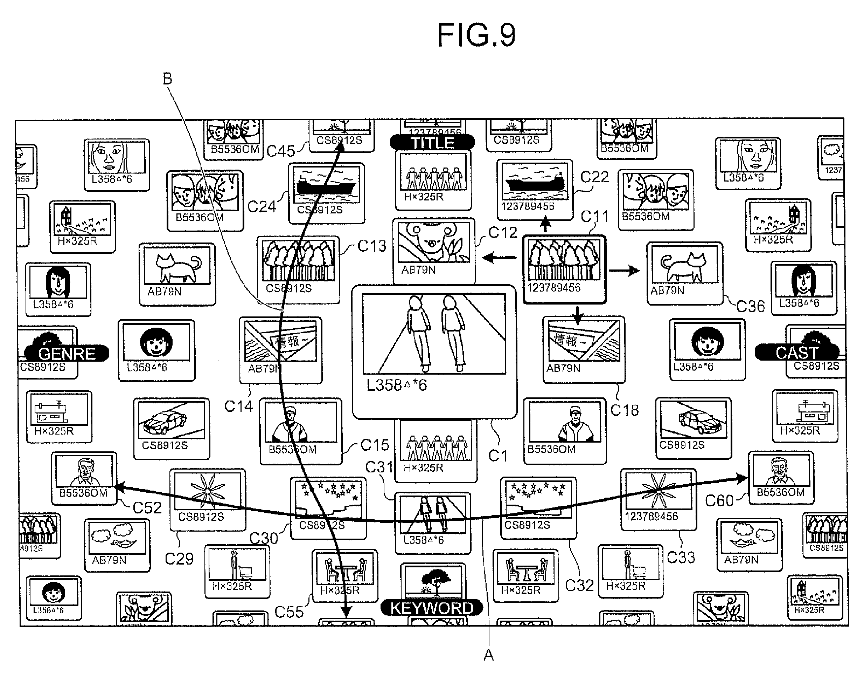

In this manner, the list information in which are arranged the display information C1 of the key content and the display information C11, ... of the other contents is displayed on the display module 170. Incidentally, the display controller 106 stores in advance the display position and size of the display information, and, after the calculation of the relation to the key content, sequentially arranges pieces of the display information of the other contents each in a predetermined size. FIG. 9 illustrates an example of the list information in which are arranged the display information C1 of the key content and the display information C11, ... of the other contents. In the list information of FIG. 9, items "TITLE", "CAST", "KEYWORD", and "GENRE" are displayed on the upside, right side, downside, and left side of the screen, respectively. Further, with the display information C1 of the key content as the center, pieces of the display information of the other contents are arranged from around the center toward the outside.

As described above, according to the first embodiment, pieces of display information of other contents are arranged along up, down, left, and right directions of an operation button. Therefore, upon receipt of an instruction for left-right movement through the operation button, the focus in retrieval on the display information C30 moves in directions indicated by a double-head arrow A. Similarly, upon receipt of an instruction for up-down movement through the operation button, the focus in retrieval on the display information C30 moves in directions indicated by a double-head arrow B. Additionally, for example, if the cursor moves one space to the right in response to an instruction when the focus is on the display information C11, the focus moves to the display information C36. Similarly, if the cursor moves one space in the up, left, or down direction in response to an instruction, the focus moves from the display information C11 to the display information C22, C12, or C18. Thus, the operation using the operation button such as an arrow key on the remote controller 90 can be facilitated.

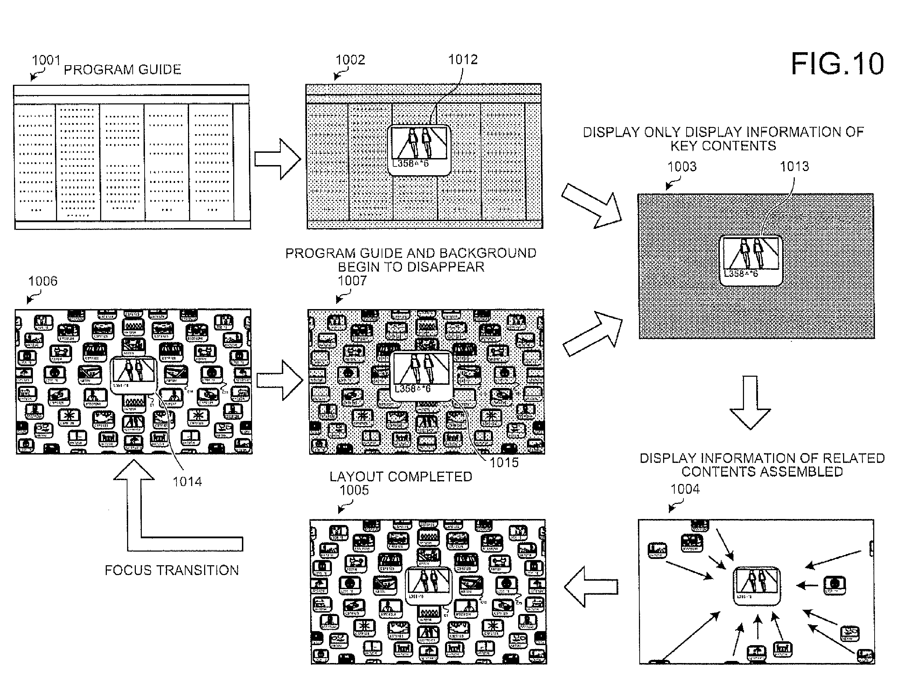

Next, the transition of a screen upon the selection of a content from a program guide or a list screen is explained with reference to FIG. 10. The first display processor 122 first displays a screen 1001 as a program guide. Then, the remote controller operation receiver 101 receives an instruction for operation of selecting one content from the program guide.

In this case, as shown in a screen 1002, after displaying the display information 1012 of the selected content, the display stop module 123 begins to erase the program guide, the background, and the like. As a result, as shown on a screen 1003, only a display information 1013 corresponding to a key content is displayed on top of black background. Thus, the display information 1013 corresponding to the key content functions as a reference for repositioning. In other words, the display information 1013 functions as a reference display information.

Next, as shown on a screen 1004, the second display processor 124 displays, while displaying the display information of the key content, the transition of the display information of other contents related to the key content in animation so that the pieces of display information of other contents are displayed from positions at the outermost peripheral part of the display area to positions specified based on the relation to the key content. Then, as shown on a screen 1005, the second display processor 124 displays a screen representing list information of the pieces of the display information positioned in the order the relation to the key content descends.

Thereafter, as shown on a screen 1006, the first display processor 122 displays a list screen, and performs a focus transition 1014 based on a cursor operation received by the remote controller operation receiver 101. When the remote controller operation receiver 101 receives a selection operation for a piece of display information of a content different from the key content, as shown on a screen 1007, the pieces of display information of other contents begin to be erased while only a display information 1015 of the selected content remaining unerased.

Then, as shown on a screen 1003, the second display processor 124 displays only a display information 1013 as a next key content on top of the black background. Subsequently, the second display processor 124 displays the transition of display information of other contents other than the next key content in animation as the screen 1004. Then, the second display processor 124 positions the display information of the selected content at the center as well as positions the pieces of display information of other contents related to the selected content around the display information of the selected content, as in the screen 1005.

Thereafter, a series of transitions from the screen 1006 to the screen 1005 are repeated based on selection operations by the user. In the screen transition, the user can recognize the key content by stop displaying other pieces of information, while allowing the display information of the key content to remain displayed. Further, the user can recognize the relationship between the key content and the other contents by the transition such as to position the display information of the key content at the center and pieces of display information of the other contents around the display information of the key content. This can facilitate searching of a content desired by the user.

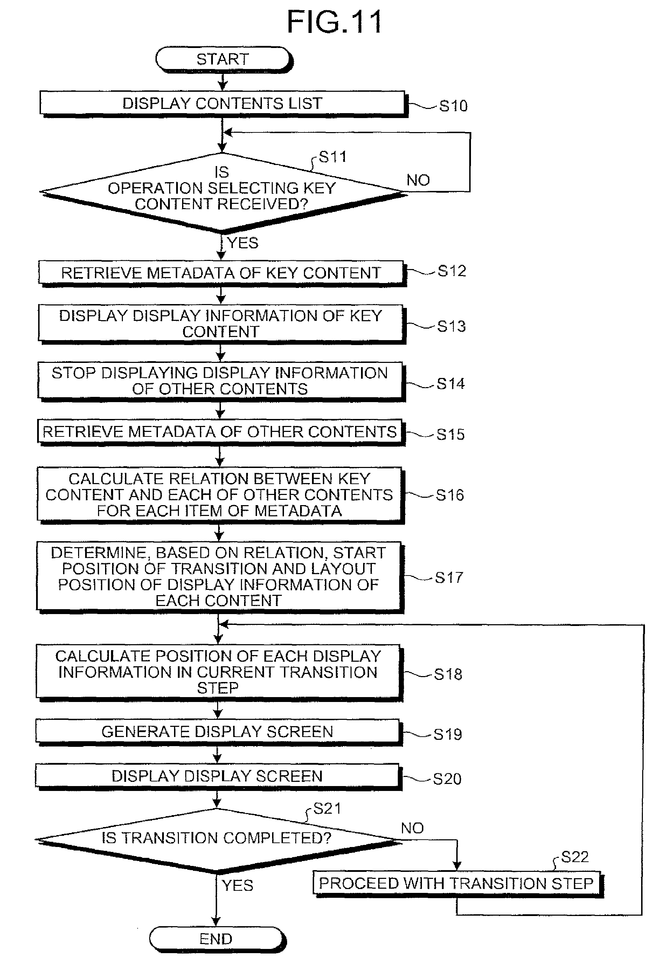

Next, redisplay processing of pieces of display information by the display processing apparatus 100 having the above configuration is explained. FIG. 11 is an exemplary flow chart of the redisplay processing of display information by the display processing apparatus 100.

The first display processor 122 displays a list information regarding pieces of display information of contents as shown in FIG. 5 (S10). A content list screen such as a program guide may be displayed instead of the list displayed regarding the pieces of the display information of the contents.

The remote controller operation receiver 101 then waits until receipt of a selection operation for a next key content through an operation button of the remote controller 90 (S11). Upon the receipt of the selection operation (Yes at S11), the metadata acquiring module 103 acquires metadata of the selected key content (S12).

The display stop module 123 then displays only the display information of the next key content, and begins to erase pieces of display information of other contents (S13) . As a result, the display stop module 123 displays only the display information of the next key content, and stops displaying the other pieces of information including pieces of display information of other contents and background (S14).

Next, the metadata acquiring module 103 acquires metadata of other contents other than the key content (S15). In particular, the metadata acquiring module 103 starts acquiring the metadata simultaneously with the start of erasing the display information of the other contents. This can shorten the time taken until the display.

The relation calculator 104 calculates, for each item included in the metadata, the relation of each of the other contents to the key content (S16).

Next, the transition determining module 111 specifies an order of transition and a transition path from a display position where the transition starts to a display position where the transition ends, for each piece of display information of each of the other contents, based on the relation between each of the other contents and the key content (S17).

The display position calculator 112 then calculates a display position of the piece of the display information of the each of the other contents, in a transition step for each predetermined time, based on the transition path and the order of transition between the display position corresponding to the start position of the transition and the display position corresponding to the position after the transition, calculated by the transition determining module 111 (S18). Here, the predetermined time corresponds, for example, to an update interval of the animation.

Then, the second display processor 124 generates a screen information including the pieces of the display information of respective contents are displayed at respective display positions calculated by the display position calculator 112 (S19), and displays the screen information (S20).

The second display processor 124 determines whether the transition is completed (S21). When the second display processor 124 determines that the transition is not completed (No at S21), the transition step is forwarded by one (S22) and processing from S18 is again performed.

Thus, the transition in the animation of pieces of the display information of the other contents related to the key content as shown on the screen 1004 in FIG. 10 can be performed by repeating the processing from S18 to S22.

On the other hand, when the second display processor 124 determines that the transition is completed (Yes at S21), the processing ends.

Therefore, the user can easily recognize other contents related to the key content from large number of contents through an operation of the remote controller 90 by positioning in animation the pieces of display information of other contents on a plurality of polygons formed concentrically around the display information of the key content corresponding to a search key, in a form that conforms with the direction of operation of the operation button, from a position near the center in the order the relation to the key content descends.

Referring back to FIG. 1, the display controller 106 comprises a scrolling module 121. When the remote controller operation receiver 101 receives an instruction specifying display information of content of current interest (focused content) in response to the depression of an operation button on the remote controller 90, the scrolling module 121 scrolls the list information in the operation direction in a predetermined display range. At this time, regardless of the movement amount of the list information due to scrolling by the scrolling module 121, the display controller 106 maintains the display information of the key content to be displayed in the display range. Besides, the display controller 106 displays the display information of the focused content specified from other contents than the key content by the operation with the operation button in such a manner that the display information of the focused content is larger than that of the other contents not specified.

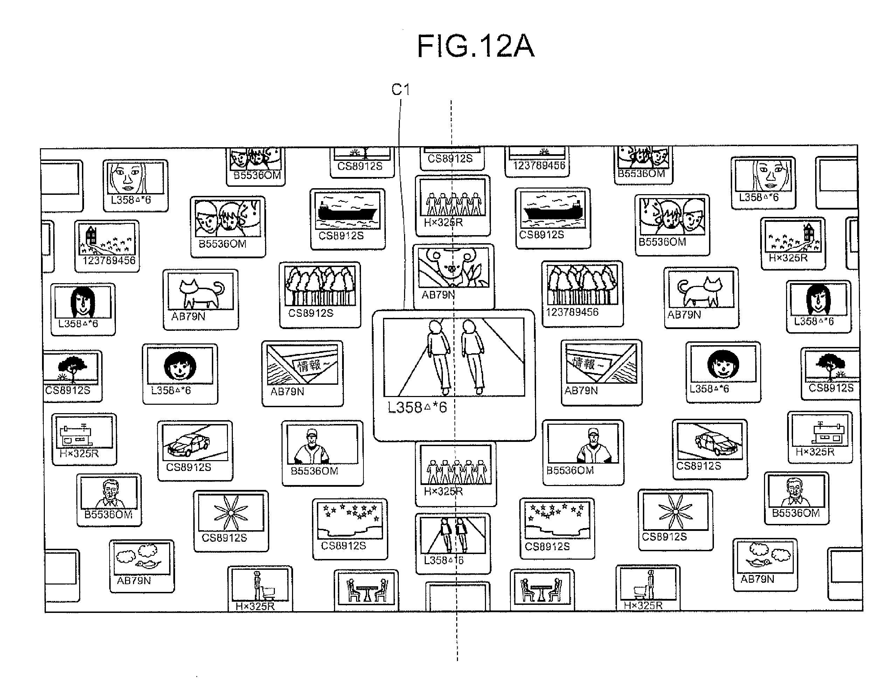

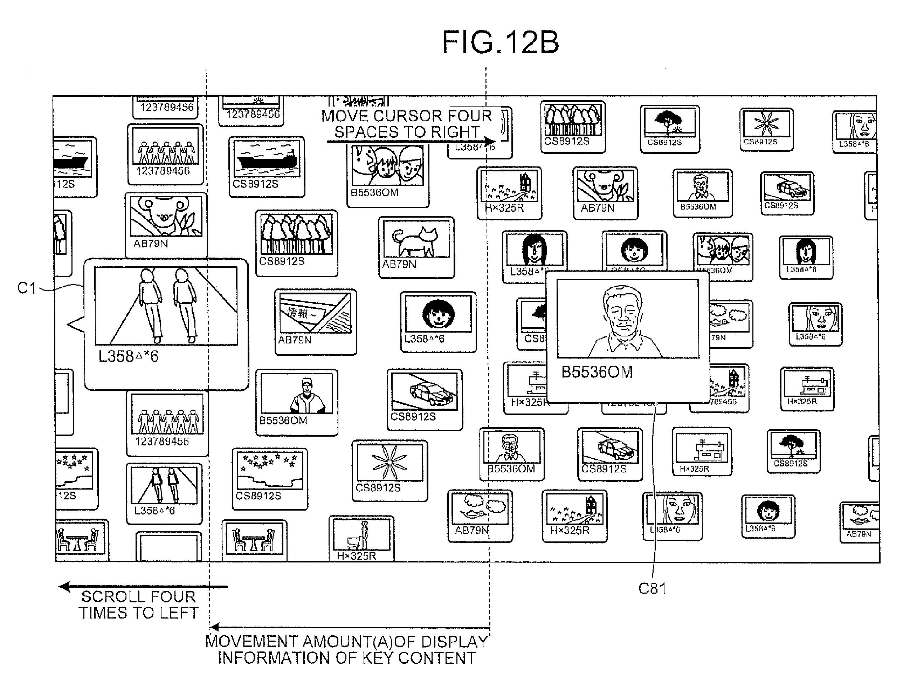

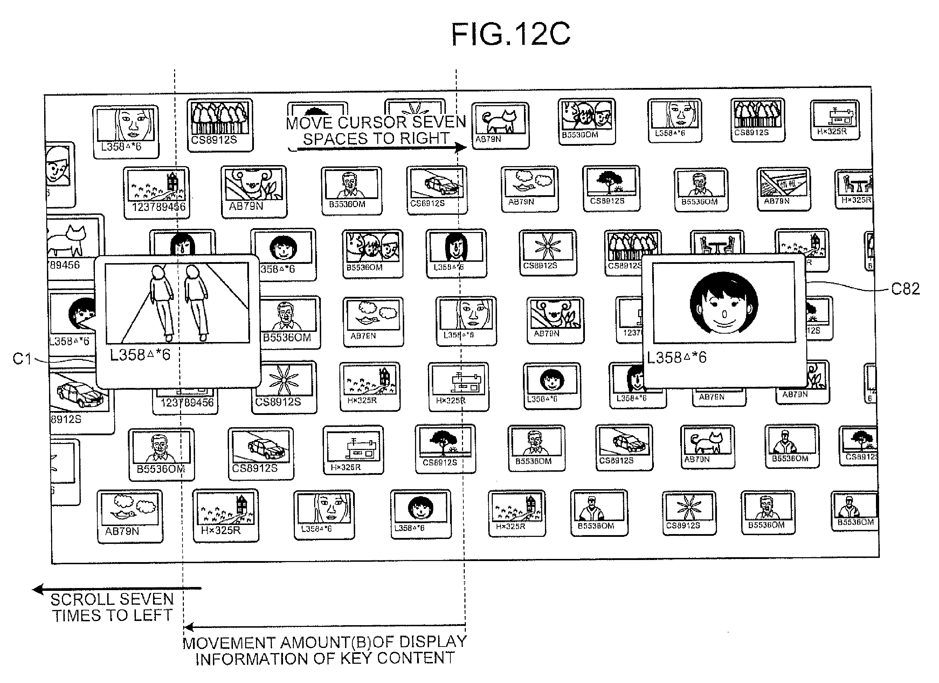

FIGS. 12A to 12C are schematic diagrams for explaining the scrolling of the list information in which are arranged the display information of the key content and that of the other contents. FIG. 12A illustrates the list information in the initial state in which the display information C1 of the key content is arranged in the center. In this state, the key content is the focused content. At this point, for example, if a user presses the right arrow of the operation button four times, the cursor moves four spaces to the right. Accordingly, display information C81 of another content is displayed as display information of the focused content, and the list information is scrolled four times to the left as illustrated in FIG. 12B. Incidentally, one-scroll movement amount is preset. After that, if the user further presses the right arrow of the operation button three times, the cursor moves three spaces to the right. Namely, the cursor has moved seven spaces from the initial state. Accordingly, display information C82 of another content is displayed as display information of focused content, and thus the list information has been scrolled seven times to the left as illustrated in FIG. 12C.

The display information C1 of the key content is maintained to be displayed in the display range even if its initial display position moves outside the display range. Suppose that the initial display position of the display information C1 moves outside the display range when the list information is scrolled four times to the left from the initial state. Then, the movement amount (A) of the display information C1 by scrolling four times to the left from the initial state is equal to the movement amount (B) of the display information C1 by scrolling seven times to the left. In both the cases, the display information C1 of the key content is displayed in the same position.

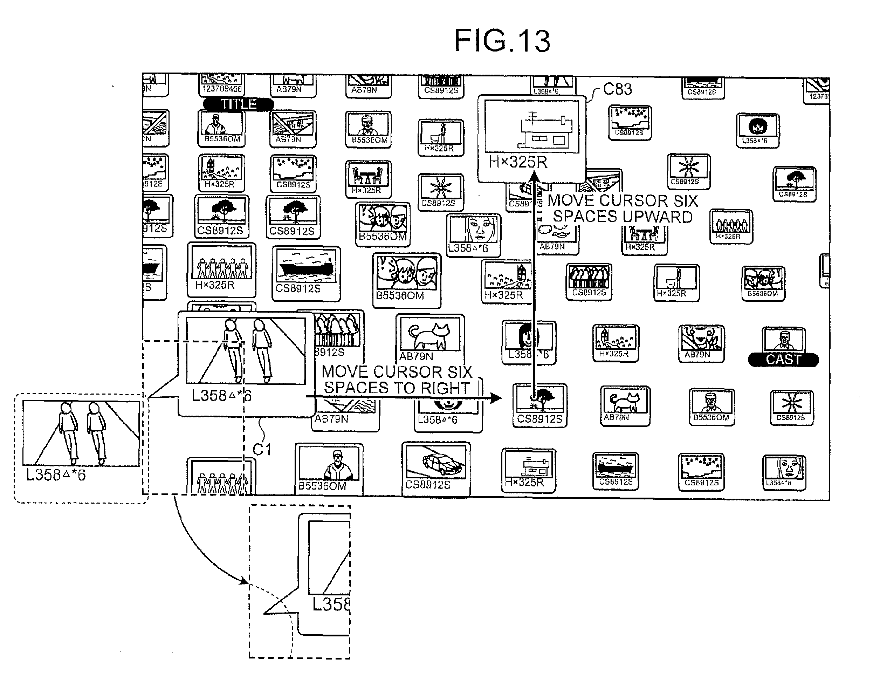

If the initial display position of the display information C1 moves outside the display range when the list information is scrolled by the scrolling module 121, the display controller 106 displays the display information C1 with direction indication indicating the direction of the initial display position. FIG. 13 is another schematic diagram for explaining the scrolling of the list information in which are arranged the display information of the key content and that of the other contents. FIG. 13 illustrates the list information in which, in response to user' s depression of the right arrow of the operation button six times and the up arrow six times, the cursor moves six spaces to the right and six spaces upward, and display information C83 of another content is displayed as display information of focused content. Due to this, it is assumed herein that the initial display position of the display information C1 moves in the lower left direction to the outside of the display range (see the display information located outside the display range in FIG. 13). Thus, the display controller 106 displays the display information C1 with direction indication in a substantially triangular shape as illustrated in FIG. 13. The direction indication points to the direction of the initial display position with one corner.

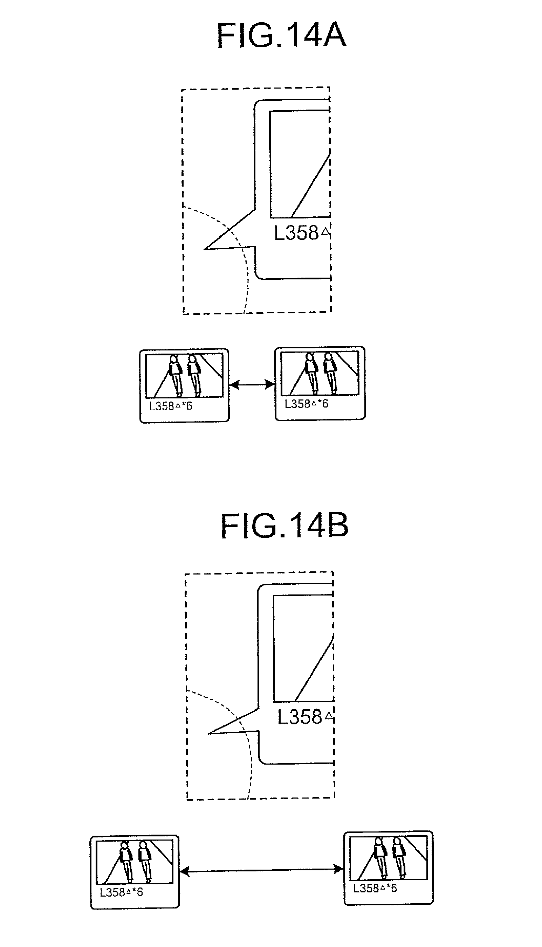

In addition, the display controller 106 displays the direction indication smaller as the distance between the current display position and the initial display position of the display information C1 increases. FIGS. 14A and 14B are schematic diagrams for explaining the direction indication indicating the direction of the initial display position of the display information C1 of the key content. As can be seen, the display controller 106 displays the direction indication smaller when the current display position of the display information C1 is closer to the initial display position (see FIG. 14A) than when the current display position of the display information C1 is more distant from the initial display position (see FIG. 14B).

As described above, the direction indication is displayed in a size according to the distance between the current display position and the initial display position of the display information C1 of the key content. This allows a user to roughly estimate the distance between the current display position and the initial display position of the display information C1. While the direction indication is described above as varying in size according to the distance between the current display position and the initial display position of the display information C1, it may vary in color according to the distance to indicate the distance.

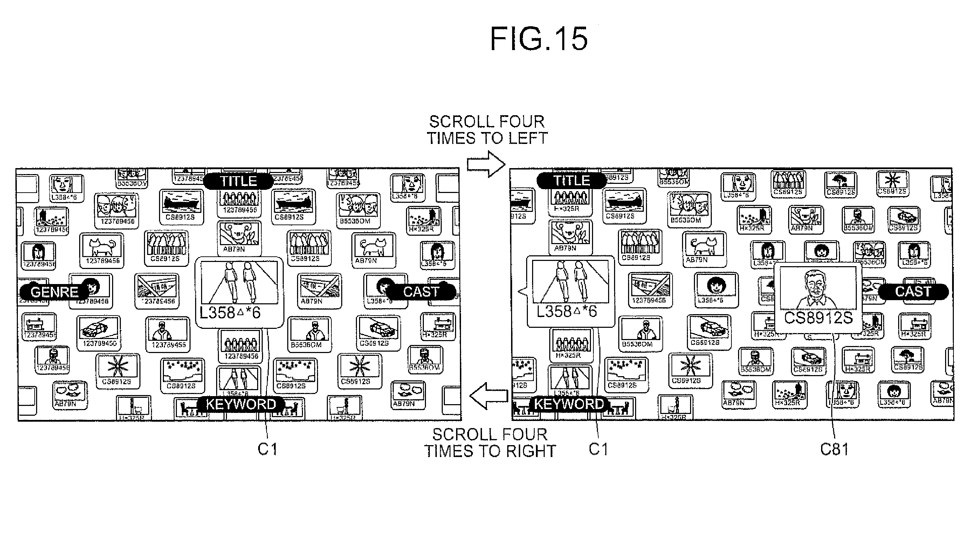

If there is a change in the number of items in the display range when the list information is scrolled by the scrolling module 121, the display controller 106 changes the display of the items according to the change. More specifically, when the list information is scrolled by the scrolling module 121, pieces of display information of other contents belonging to an item assigned to an axis may move from inside the display range to the outside. If this removes the item from the display range, the display controller 106 does not display the item on the display module 170. FIG. 15 is a schematic diagram for explaining the list information in which the number of items changes in the display range. As illustrated in FIG. 15, it is assumed that the list information is scrolled four times to the left from the initial state, and that all pieces of display information of other contents belonging to, for example, the item "Genre" assigned to the left axis move from inside the display range to the outside. Then, the display controller 106 does not display the item "Genre" on the display module 170.

On the other hand, when the list information is scrolled by the scrolling module 121, pieces of display information of other contents belonging to an item assigned to an axis may move from outside the display range to the inside. If this adds the item to the display range, the display controller 106 additionally displays the item on the display module 170. As illustrated in FIG. 15, it is assumed that the list information is scrolled four times to the right from a certain state, and that at least one piece of display information of another content belonging to, for example, the item "Genre" assigned to the left axis moves from outside the display range to the inside. Then, the display controller 106 additionally displays the item "Genre" on the display module 170.

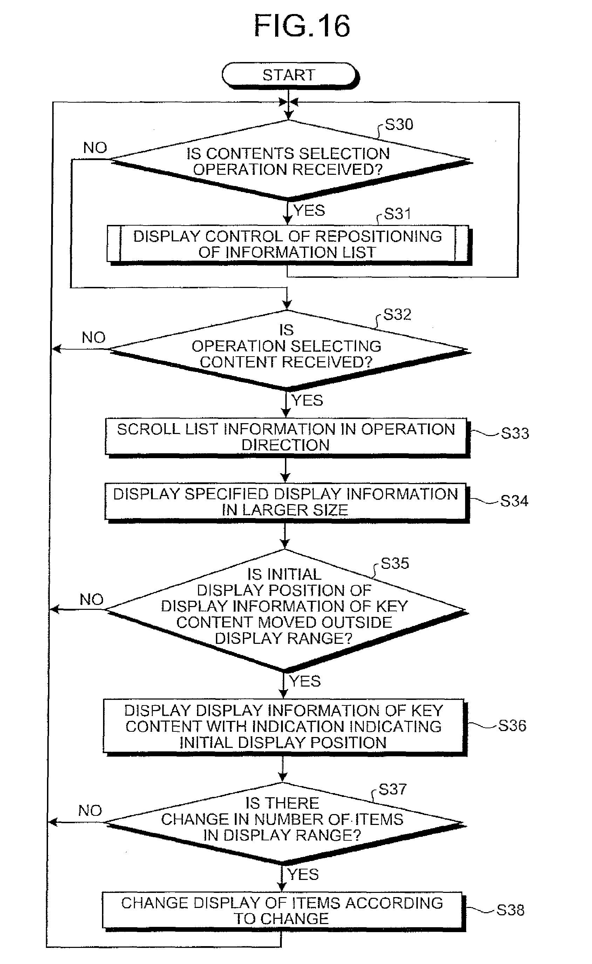

A description will now be given of the process of scrolling the list information performed by the display processing apparatus 100. FIG. 16 is a flowchart of the scrolling processing of the list information performed by the display processing apparatus 100.

The remote controller operation receiver 101 determines whether an instruction for an operation selecting a focused content is received (S30). When the remote controller operation receiver 101 determines that such operation is received (Yes at S30), the display controller 106 performs display control by which the list of information is repositioned, followed by the restart of processing from S30 (S31) . The display control at S31 is performed in the same manner as in the processing from S12 to S22 in FIG. 11, and, thus, the explanations thereof are omitted.

When the remote controller operation receiver 101 determines that the operation selecting the focused content is not received (No at S30), the remote controller operation receiver 101 determines whether an operation to display the focused content is received (S32). When the remote controller operation receiver 101 determines that the operation is not received (No at S32), the processing from S30 is again started.

On the other hand, when the remote controller operation receiver 101 determines that the operation is received (Yes at S32), the scrolling module 121 performs scrolling by moving the list information in the operation direction (S33) . The display controller 106 displays the display information of the focused content, instructed by the operation through the operation button, in a larger display size than the display size of the pieces of display information of other contents not instructed by the operation through the operation button (S34).

Next, the display controller 106 determines whether the initial display position of display information of key content is moved outside the display range (S35) . If the initial display position is not moved outside the display range (No at S35), the process returns to S30. On the other hand, if the initial display position is moved outside the display range (Yes at S35), the display controller 106 displays the display information of the key content with direction indication indicating the direction of the initial display position (S36).

Thereafter, the display controller 106 determines whether there is a change in the number of items in the display range (S37). If there is no change in the number of items (No at S37), the process returns to S30. On the other hand, if there is a change in the number of items (Yes at S37), the display controller 106 changes the display of the items according to the change (S38) . That is, if an item is disappeared from the display range, the display controller 106 does not display the item. Meanwhile, if an item is appeared in the display range, the display controller 106 additionally displays the item.

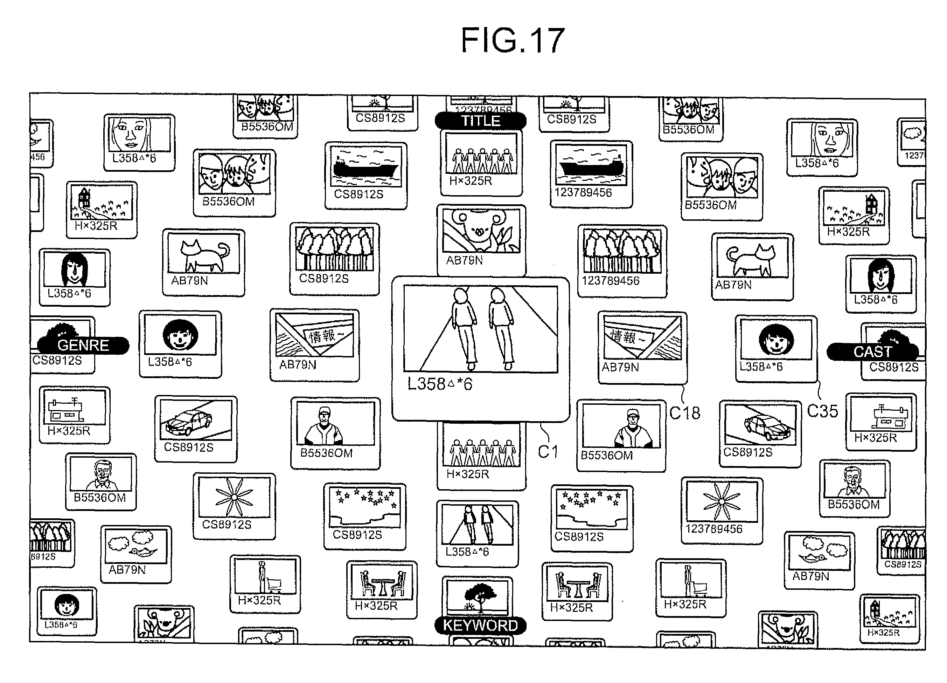

Along with the transition of an image displayed on the screen of the display module 170, a description will be given of the scrolling processing of the list information by the scrolling module 121. FIGS. 17 to 21 are schematic diagrams for explaining screen transition upon leftward scrolling of the list information in which are arranged display information of key content and that of other contents.

When the remote controller operation receiver 101 receives the selection of key content, as illustrated in FIG. 17, list information is displayed in which the display information C1 of the key content is arranged in the center thereof. In the list information, the key content is the focused content, and the selection or focus is on the display information C1. This position of the display information C1 represents its initial display position.

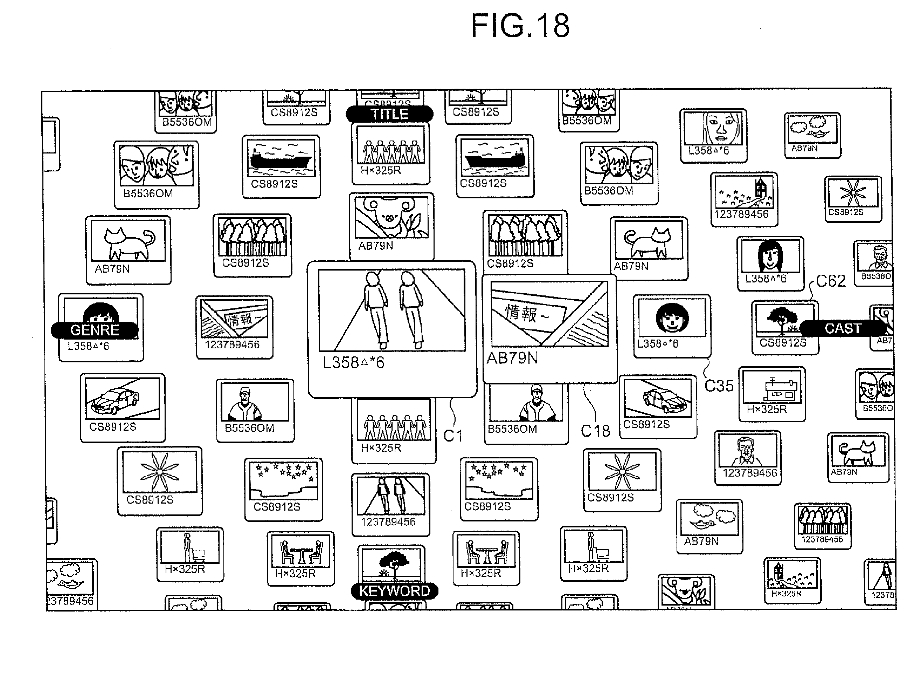

Then, when an instruction is received to move the selection or focus from the display information C1 of the key content to the display information C18 of another content, the cursor moves one space to the right, and also the list information is scrolled once to the left. Thus, the list information as illustrated in FIG. 18 is displayed on the display module 170.

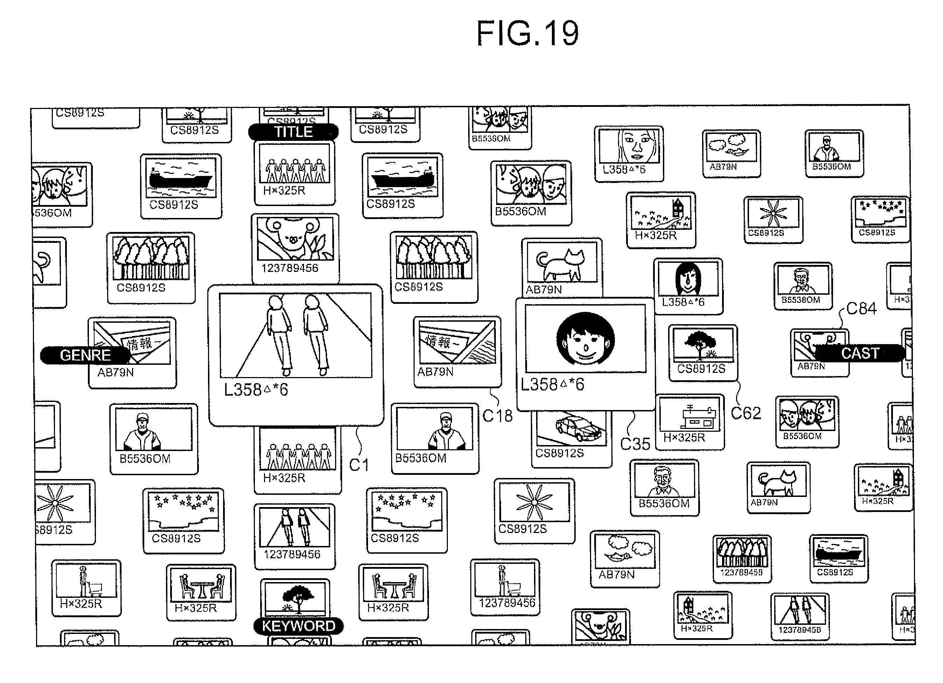

Thereafter, if an instruction is received to move the selection or focus from the display information C18 to the display information C35 of another content, the cursor further moves one space to the right, and also the list information is scrolled once again to the left. Thus, the list information as illustrated in FIG. 19 is displayed on the display module 170.

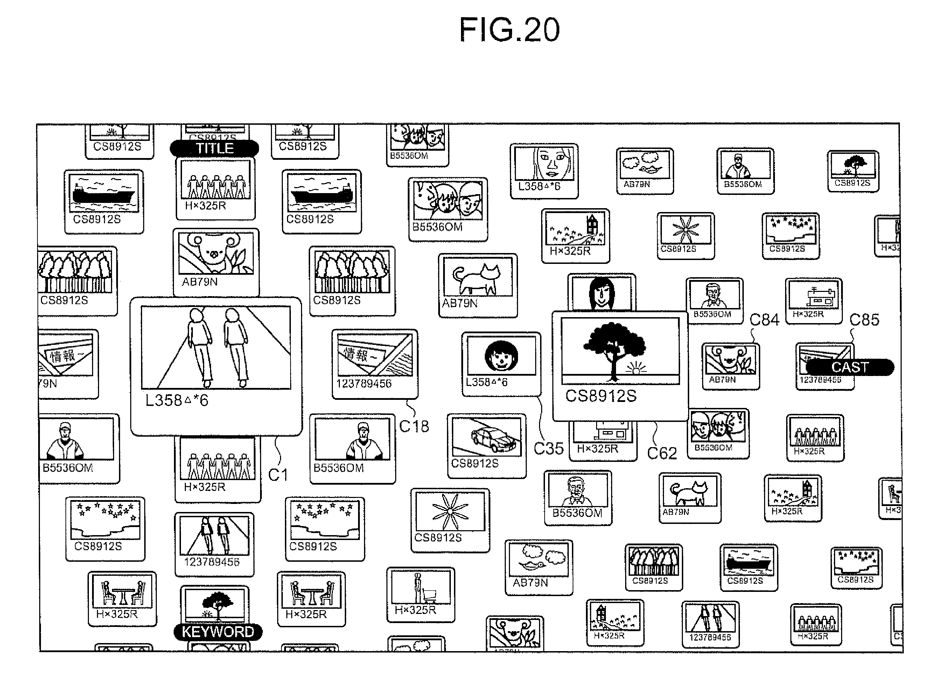

If a further instruction is received to move the selection or focus from the display information C35 to display information C62 of another content, the cursor further moves one space to the right, and also the list information is scrolled once again to the left. Thus, the list information as illustrated in FIG. 20 is displayed on the display module 170. At this point, all pieces of display information of other contents belonging to the item "GENRE" move to the outside of the display range, which removes the item "GENRE" from the display range. Accordingly, the display controller 106 does not display the item "GENRE" in the list information.

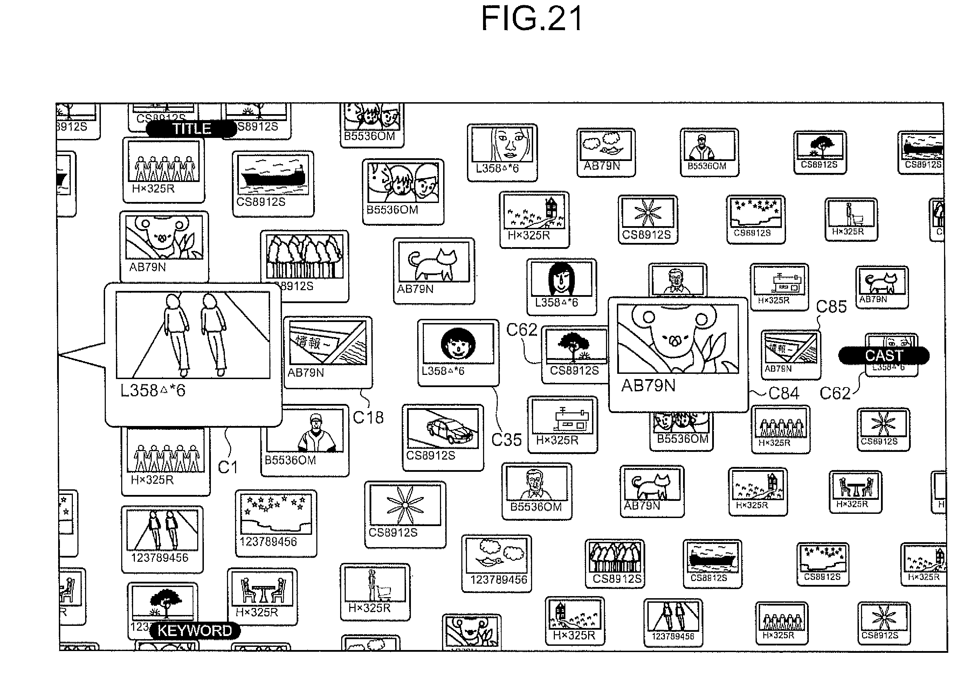

If a still further instruction is received to move the selection or focus from the display information C62 to display information C84 of another content, the cursor further moves one space to the right, and also the list information is scrolled once again to the left. Thus, the list information as illustrated in FIG. 21 is displayed on the display module 170. At this point, the initial display position of the display information C1 moves to the outside of the display range. Therefore, the display controller 106 displays the display information C1 with direction indication pointing to the left to indicate the initial display position. Since the initial display position of the display information C1 has already moved outside the display range, even if the list information is further scrolled to the left, the display information C1 stays at the current display position. The distance between the current display position and the initial display position of the display information C1 is represented by the display size of the direction indication.

Next, the transition of each piece of display information when the list of information regarding pieces of display information of contents is redisplayed by the second display processor 124 according to this embodiment will be explained.

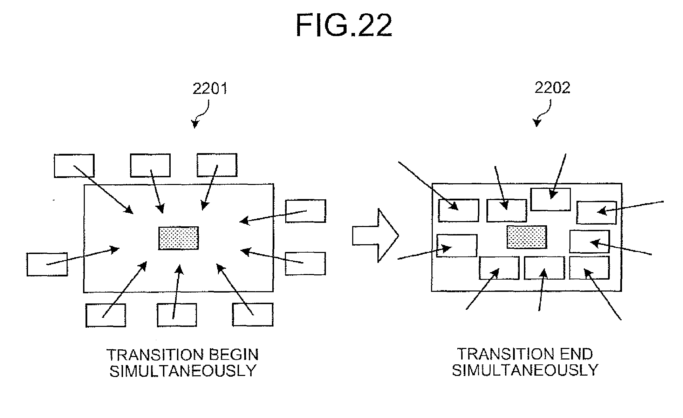

FIG. 22 is a diagram for explaining the transition of pieces of display information of contents displayed by the control of the second display processor 124 according to this embodiment. As shown in a reference character 2201 in FIG. 22, except for the display information of the content positioned at the center of display area, the transition of individual pieces of display information of other contents begins simultaneously at the position on the transition path specified by the transition determining module 111. According to this embodiment, the position where the transition begins of each of the contents is set to a position outside the display area. This position is determined by the position after the transition. Specifically, the positions where the transition begins of all the display information are set so that the transitions to the display positions for respective transitions are simultaneously completed.

As shown in a reference character 2202 in FIG. 22, the second display processor 124 performs display controlling so that the transitions of all the respective pieces of display information simultaneously end within the display area.

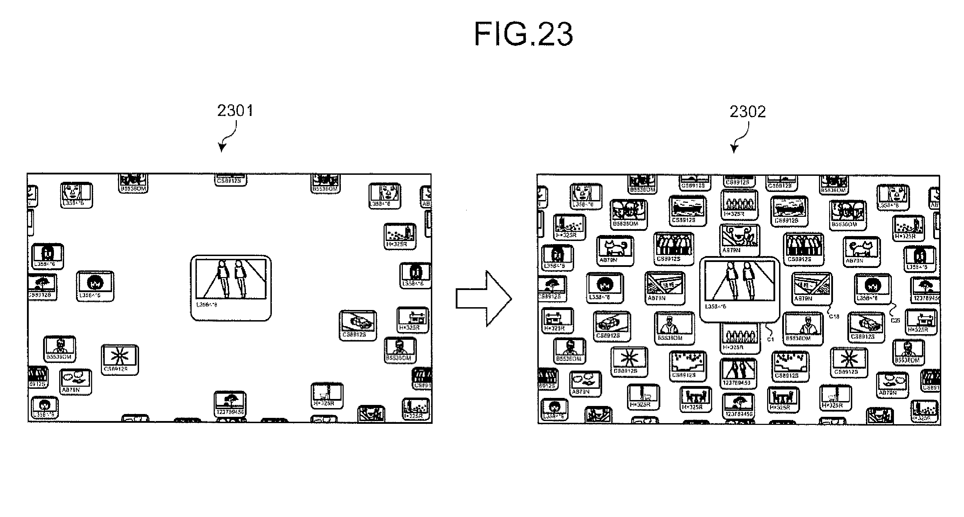

Specifically, as shown on a screen 2301 in FIG. 23, the second display processor 124 displays the pieces of the display information of the individual contents in animation so that the transitions of the pieces of the display information begin at positions outside (near an outer frame) of the display area and end toward the central part of the display area. As shown on a screen 2302, the second display processor 124 ends the displaying in animation when the pieces of the display information of the respective contents are positioned at the end of the transition path specified by the transition determining module 111.

As described above, according to this embodiment, the transitions of the pieces of display information begin and end simultaneously. However, the aforementioned transition is by way of example only, and the present embodiment is not limited thereby. In the following, a first modification will be explained.

In a first modification, the transitions of pieces of display information of respective contents begin at different times, and end at different times. For such transitions, the transition determining module 111 previously sets the order of transition for a piece of display information of each content and intervals between the start time of transition.

The transitions of the pieces of display information may be started in any order. According to this modification, the transition of the individual piece of display information of content corresponding to a recording time or a recording reservation time close to the key content begins at an earlier time. Thus, the user can recognize the content corresponding to time close to the key content, and the content desired by the user can easily be specified. The order to begin the transition may be determined by any method without limitation to this modification, and for example, the order may be determined by a method in which the transition begins in the order the relation to the key content descends.

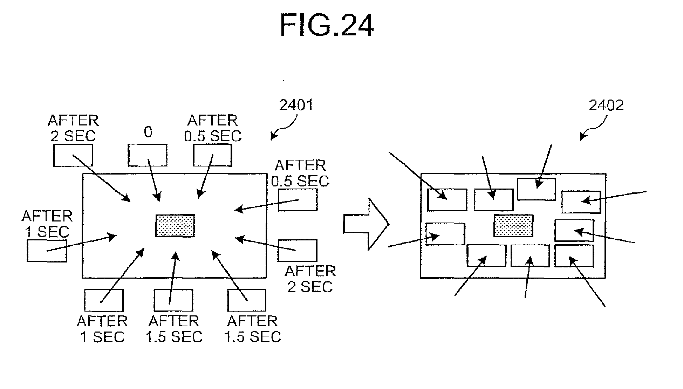

FIG. 24 is a diagram for explaining the transition of a piece of information of each content by the display controller of the second display processor 124 according to the first modification. As shown in a reference character 2401 in FIG. 24, except for the display information of the content positioned at the center of the display area, individual pieces of display information of other contents begin the transition from the positions on the transition path specified by the transition determining module 111 in the preset order of transition and at preset start time of the transition. According to this modification, the positions where the transitions begin of the individual contents are set outside the display area.

As shown in a reference character 2402 in FIG. 24, the second display processor 124 controls the displaying in animation so that the transitions of the individual piece of display information end within the display area in the preset order.

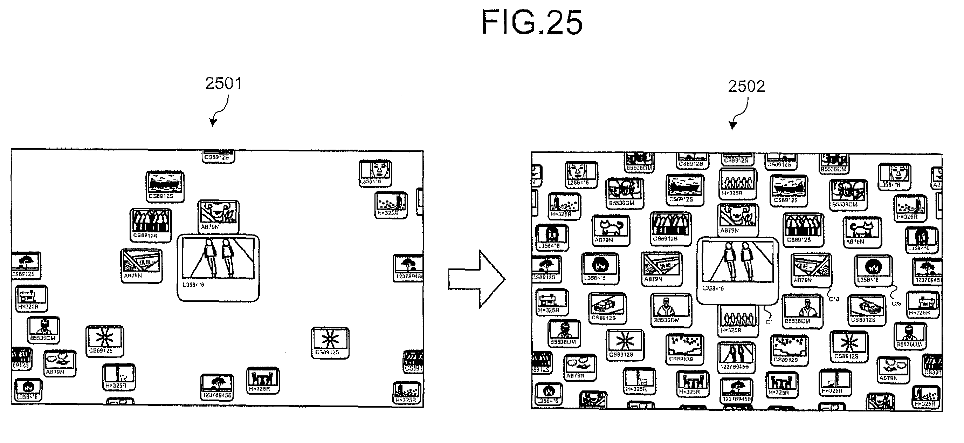

Specifically, as shown on a screen 2501 in FIG. 25, the second display processor 124 displays the transitions of the pieces of display information in animation so that the pieces of display information of the individual content corresponding to earlier order of transition begin the transitions before that corresponding to later order of transition, from the positions outside the display area toward the center of the display area. In this case, the transitions of the pieces of display information of the individual contents end at different time according to the order of transition. As shown on a screen 2502 in FIG. 25, the second display processor 124 finally ends the displaying in animation when the pieces of display information of all contents are positioned at the positions corresponding to the end of the transition path specified by the transition determining module 111.

The transitions of the pieces of display information are not limited to the transitions of the pieces of display information begun from around the display area. In a second modification, the transitions of the pieces of display information of the individual contents begin from behind the display area at different time for each piece of display information, and end at different time for each piece of display information. Settings of the start times of the transition and the like are the same as that in the first modification.

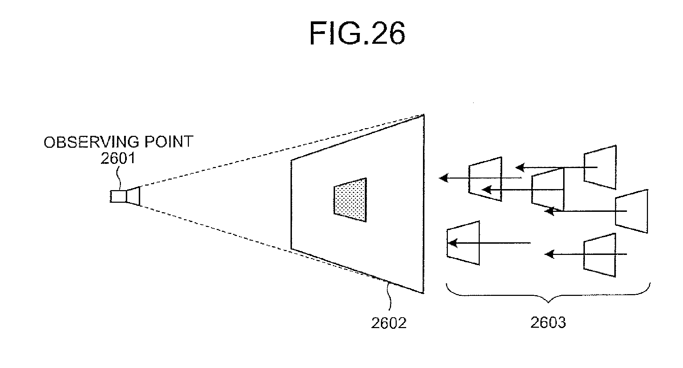

FIG. 26 is a diagram for explaining the transition of display information of each content. The second display processor 124 displays the display information so that a display area 2602 is viewed from an observing point 2601. In this case, the transition path of the piece of display information of each content is set so that the piece of display information is displayed from a preset start position of transition, which is opposite to the observing point 2601 via the display area 2602, to the position on the display area 2602. As shown in a reference character 2603, the second display processor 124 displays the transition of the display information in animation so that the piece of display information of each content is displayed along the set transition path.

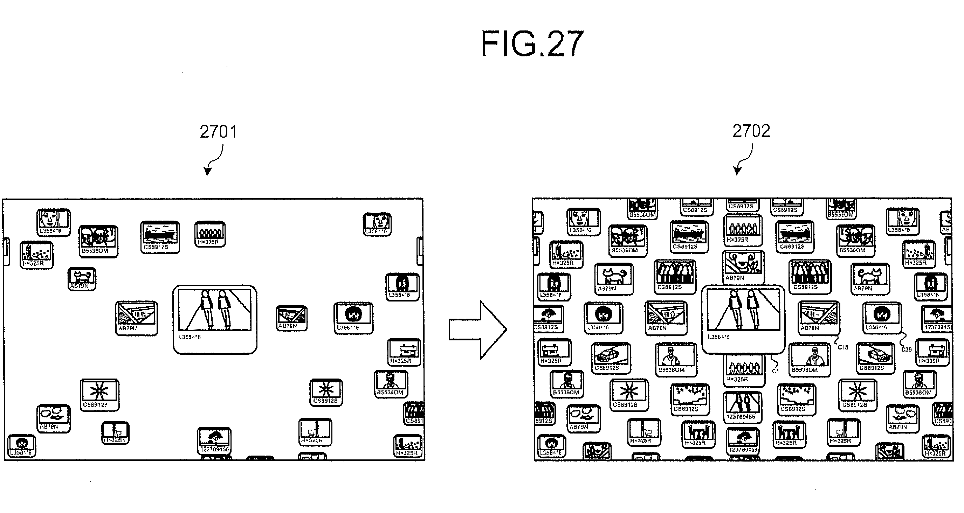

In particular, as shown in a screen 2701 of FIG. 27, the second display processor 124 displays the display information of each content corresponding to earlier start time of transition on the display region so that the display information are displayed in a display size smaller than an ordinary display size. Then, the second display processor 124 displays the display information so that the display size of the display information gradually increases as the transitions to the predetermined display position takes place. Accordingly, the pieces of display information of the contents are displayed while enlarging the display size thereof along with the transition end at different times in the order of transition. As shown on a screen 2702 in FIG. 27, the second display processor 124 finally ends the displaying in animation when the pieces of display information of all contents are displayed in the display sizes shown in FIG. 8.

A third modification will be explained below. In a third modification, the transitions of pieces of display information of respective contents are started from the front side of the display area on the same side as an observing point 2801 at different times, and the transitions are completed at different time for each piece of display information. The start times of transitions are the same as that in the first modification.

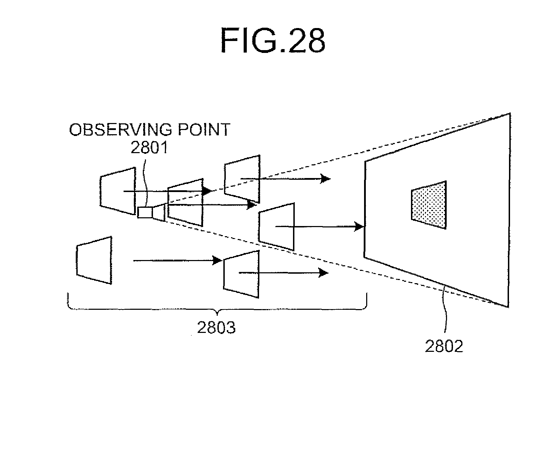

FIG. 28 is a diagram for explaining the transition of a piece of display information of each content. The second display processor 124 displays a display area 2802 so that the display area 2802 is viewed from the observing point 2801. In this case, the transition path is set so that the transition of a piece of display information of each content begins at a preset start position which is positioned on the same side as the observing point 2801 against the display area 2802, and completed at a position in the display area 2802. As shown in a reference character 2803, the second display processor 124 displays the display information in animation so that the transition of a piece of display information of each content takes place through the set transition path.

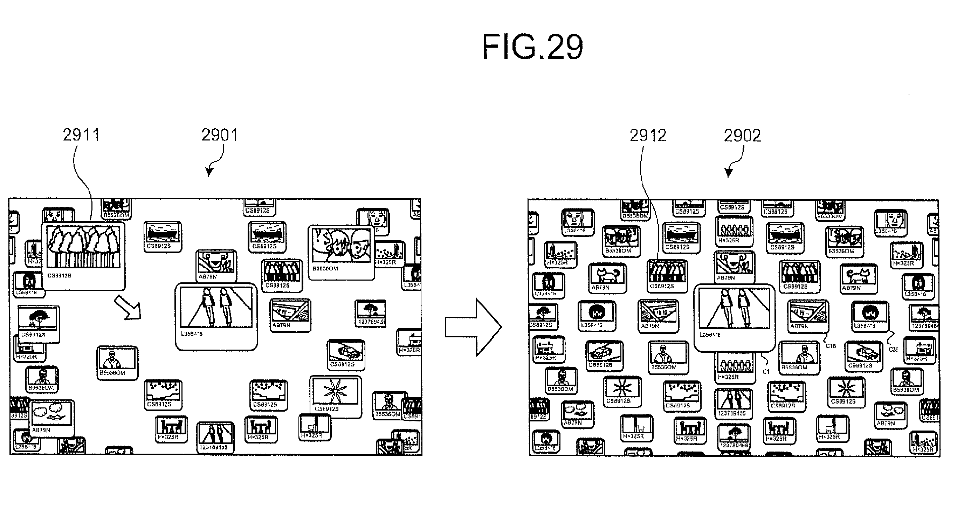

Specifically, as shown on a screen 2901 in FIG. 29, the second display processor 124 displays a piece of display information (for example, a display information 2911) of each content in an earlier to later transition start order in a larger display size than an ordinary display size within the display area. Then, the second display processor 124 displays the transition so that the display information is positioned at a predetermined display position as well as the display size of the display information is gradually decreased. Subsequently, the transition in the displaying of the display information of the each content with the reduction in the display size ends at different times in the order of transition. As shown on a screen 2902 in FIG. 29, the second display processor 124 finally finishes displaying the display information in the animation when the pieces of display information of all contents are displayed in the display sizes shown in FIG. 8 (for example, displayed in a display information 2912).

Next, a fourth modification will be explained. In the fourth modification, the transitions of pieces of display information of individual contents begin at mutually different times from the front side of a display area 3002, which is on the same side as an observing point 3001, and from behind the display area 3002, which is opposite to the observing point 3001. The transitions end at mutually different times for each piece of display information.

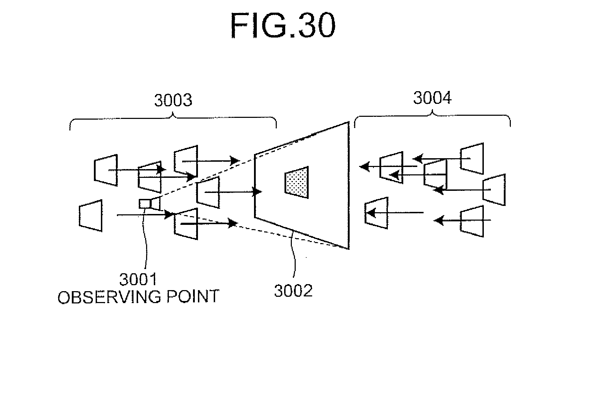

FIG. 30 is a diagram for explaining the transition of a piece of display information of each content. The second display processor 124 displays the display area 3002 so that the display area 3002 is viewed from the observing point 3001.

The transition path of pieces of display information of contents after a key content in terms of time, i.e., new or future events, is set so that the transitions of the pieces of the display information are displayed from preset transition start positions, which are on the same side as the observing point 3001 against the display area 3002 to the positions in the display area 3002. Then, the transitions of pieces of display information of the contents are displayed as shown in a reference character 3003. The transitions of the pieces of display information begin with a content closer to the key content in a broadcast time. The transition start times may be determined based on actual broadcast start time intervals or alternatively may be determined so that the transitions are started at equal intervals in a closer to farther order to the content as the key.

On the other hand, the transition path of pieces of display information of contents broadcasted before the key content in terms of time is set so that the transitions of the pieces of display information are displayed from the preset transition start positions, which are opposite to the observing point 3001 against the display area 3002, to the positions in the display area 3002. Then, the transitions of pieces of display information of the contents are displayed as shown in a reference character 3004. The transitions of the pieces of display information are started from a content closer to the key content in broadcast time. The transition start times may be determined based on actual broadcast start time intervals or alternatively may be determined at equal intervals in a closer to farther order to the content as the key.

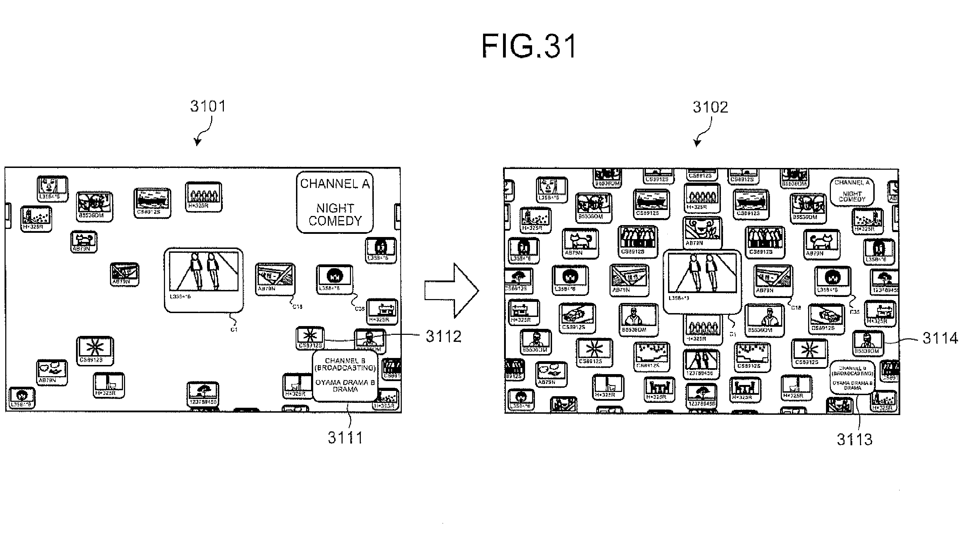

Specifically, as shown on a screen 3101 in FIG. 31, the second display processor 124 displays pieces of display information of the contents corresponding to the broadcast times later than that of the key content, in an order within the display area in a larger display size than an ordinary size (for example, a display information 3111) so that the display information of the earlier transition time are displayed first. Then, the second display processor 124 displays the transitions of the pieces of display information so that the pieces of the display information are displayed at predetermined display positions, while gradually reducing the display size thereof. On the other hand, the second display processor 124 displays the pieces of the display information corresponding to the broadcast time earlier than that of the key content in a smaller size than an ordinary size, in an order so that the pieces of the display information with earlier transition start time is displayed first (for example, a display information 3112). Then, the second display processor 124 displays the pieces of display information at predetermined display positions, while gradually increasing the display size of the pieces of display information.

As shown on a screen 3102 in FIG. 31, the second display processor 124 finally ends the displaying of the pieces of the display information in the animation when the pieces of the display information of all contents are displayed in the display sizes shown in FIG. 8. In the following, the first embodiment will be again explained.

Returning to FIG. 1, after the display of the list information regarding the pieces of display information of the contents by the second display processor 124, the detector 109 detects a change in the details of the key content. An example of such change is that the broadcast corresponding to a key content is ended and the broadcast corresponding to next content is started. In this case, a list of information based on a new key content is redisplayed. The detector 109 according to this embodiment can detect a change in key content or other contents by referring to metadata of each content displayed as list information stored in the metadata storage module 110.

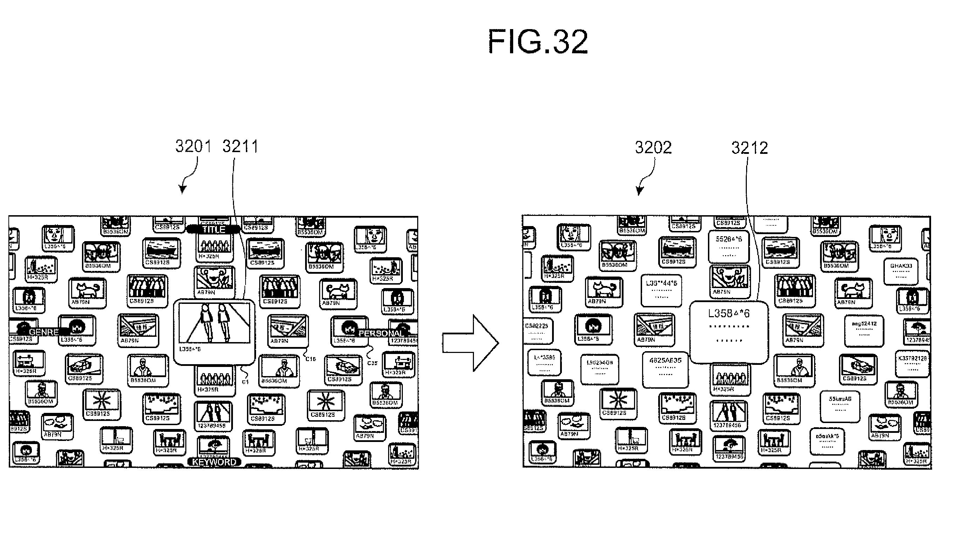

FIG. 32 is a exemplary schematic diagram of the transition of a screen of a list information updated upon the detection of a change in key content by the detector 109. On a screen 3201 in FIG. 32, the key content 3211 is displayed. This key content 3211 is a content currently on air. The detector 109 can detect the end of broadcasting of the content by referring to the metadata of the content stored in the metadata storage module 110.

The change in the content is not limited to correspond to the end of broadcasting of the content, and can be detected for various reasons. Examples of a change in content include storage of detailed information of each content by update of EPG. When the storage of the detailed information is detected as a change in the content, related contents can be more properly specified. In addition to these cases, all changes in contents, for example, switching of a content currently on air to a recording content are detected.

In this case, the list information is repositioned using, as a key content, metadata 3212 indicating EPG regarding a next broadcast content. The relation calculator 104 calculates the relation between the key content and other contents. As a result, the second display processor 124 displays a screen 3202. On this screen 3202, pieces of display information of contents having a high relation to the metadata 3212 are placed around the key content.

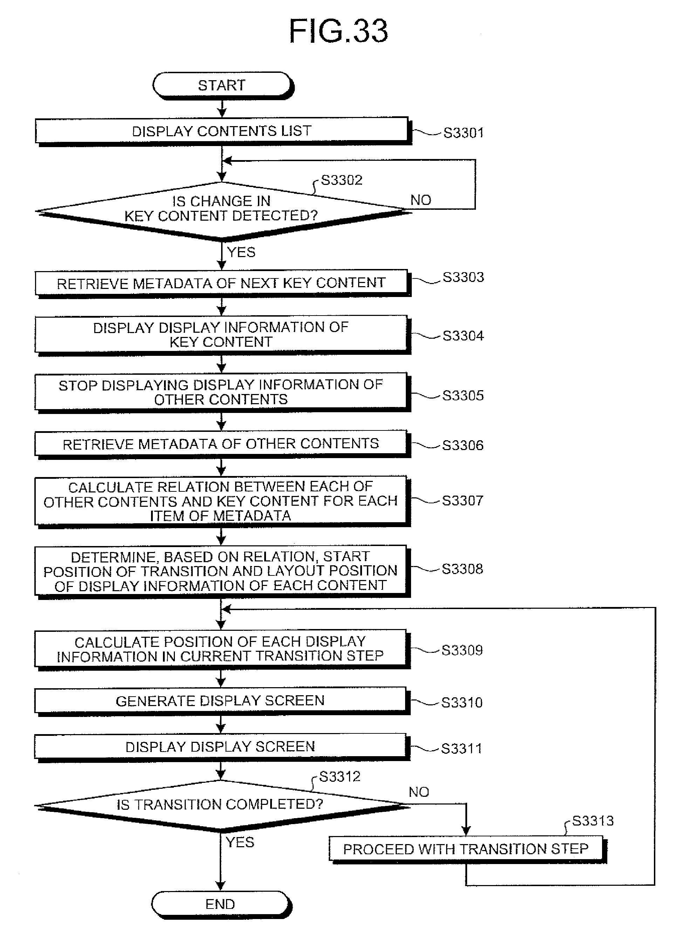

Next, processing for redisplay based on the change in key content will be explained. FIG. 33 is a flow chart of the redisplay processing based on a change in key content by the display processing apparatus 100.

The first display processor 122 displays a list information regarding pieces of display information on contents as shown in FIG. 5 (S3301).

Next, the detector 109 waits until the detection of a change in key content from the metadata of the key content stored in the metadata storage module 110 (S3302).

Upon the detection of a change in key content by the detector 109 (Yes at S3302), the metadata acquiring module 103 acquires metadata of a content as a next key (S3303). Subsequently, the same processing as in S13 to S22 in FIG. 11 is performed to display a list information based on a new key content (S3304 to S3313).

Further, the detector 109 detects a change in details of contents other than the key content among contents on which the pieces of display information are displayed as the list information. In this case, a change in details of the other contents is detected. When the display of the changed content is unnecessary, the recalculation of the whole contents is not performed and only the piece of display information of the changed content is deleted followed by transition of other contents so as to fill the empty area.

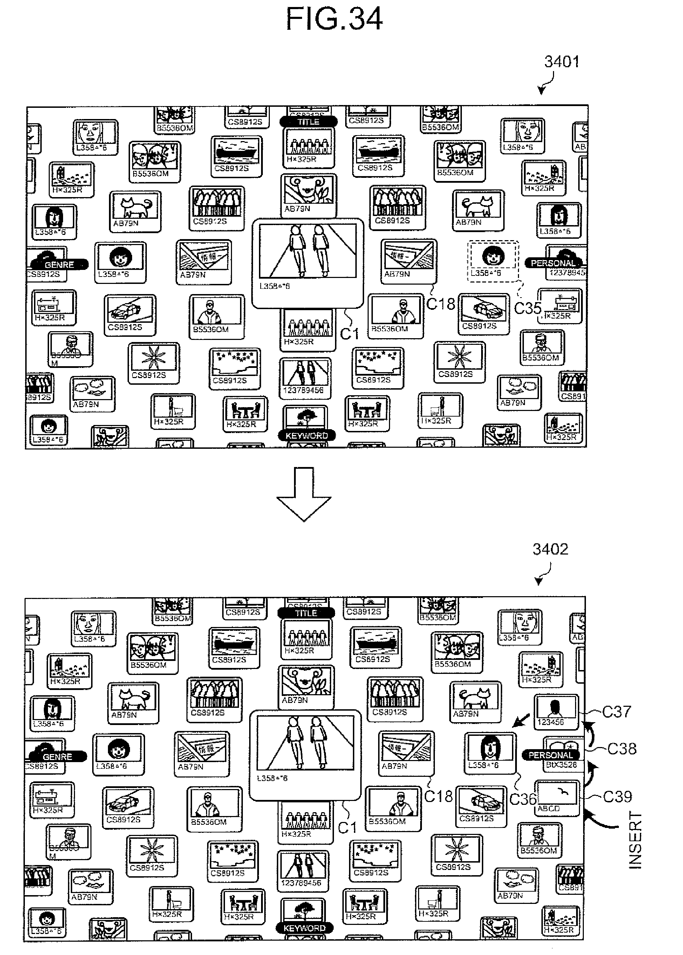

FIG. 34 is a exemplary schematic diagram for explaining the transition of pieces of display information of other contents displayed upon the stop of the display of contents other than the key content. The detector 109 detects a change in content displayed on a screen 3401 in FIG. 34, and the display stop module 123 stops the display of the display information C35 of the changed content.

In this case, as shown on a screen 3402 in FIG. 34, the second display processor 124 displays the transitions of the display information C36, C37 and C38 of other contents classified into the same genre as the content of which the displaying is stopped, so as to fill the area of the display information C35 of which the displaying is stopped. In this case, the second display processor 124 displays, from among the contents not displayed, the transition of the display information C39 of the contents having the highest relation in the same genre from outside of the display area.

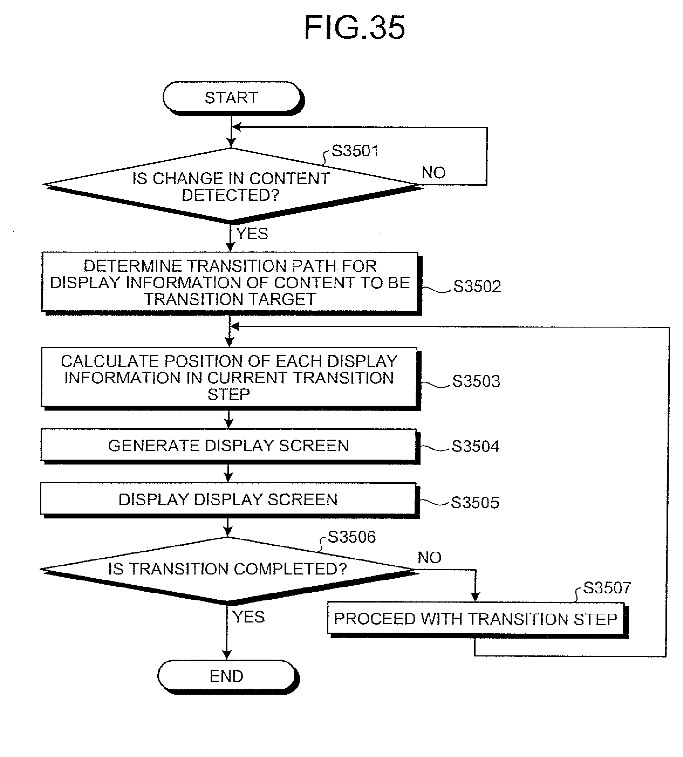

Next, processing of redisplay of a piece of display information upon the stop of the display of other contents will be explained. FIG. 35 is a flow chart for explaining the flow of processing that redisplays a piece of display information when the display of other contents is stopped.

The detector 109 waits until the detection of a change in contents other than the key content among the contents on which the pieces of display information are displayed as a list information (S3501).

Next, the transition determining module 111 specifies a transition path of pieces of display information of other contents so that the area of the display information of which the displaying is stopped is filled (S3502). In this processing procedure, the transitions of the pieces of display information are simultaneously started. The transition determining module 111 further specifies pieces of display information of contents to be newly displayed, and specifies the transition paths for the pieces of the display information.

Next, the display position calculator 112 calculates display positions of the pieces of the display information of the individual content in the current transition step, based on the transition paths from the display positions as the transition start positions calculated by the transition determining module 111 to the display positions where the pieces of display information are placed after the transition (S3503). This transition step is a step for each predetermined time. The predetermined time is, for example, an update intervals for animation display.

The second display processor 124 generates screen information in which pieces of display information of individual content are displayed at display positions calculated by the display position calculator 112 (S3504), and displays the screen information (S3505).

The second display processor 124 determines whether the transition is ended (S3506) . When the second display processor 124 determines that the transition is not ended (No at S3506), the transition step is forwarded by one step (S3507) and processing from S3503 is again performed.

Thus, as shown on the screen 3402 in FIG. 34, the transition of pieces of display information of contents to fill an empty area can be displayed in animation display by repeating processing from S3503 to S3507.

When the second display processor 124 determines that the transition has ended (Yes at S3506), the processing is ended.

That is, mere display of a list information of contents leads to a possibility that, with the elapse of time, a change in metadata or the end of broadcast time occurs and, thus, a deviation of details displayed in a list information from the latest details occurs. Accordingly, in the display processing apparatus 100 according to this embodiment, the detector 109 detects a change in content and can change the list information properly depending on whether the changed content is the key content, and, thus, it can be avoided to cause a difference between the displayed details and the latest details.

In the display processing apparatus 100 according to this embodiment, independently of transition from other screen (for example, program guide display) and transition of display screen of the list information, upon specifying a key content, only the display information of the key content is once displayed, and a background, other contents, and the like are subsequently displayed. In this case, pieces of display information of other contents are displayed in animation so that the pieces of display information are assembled toward the key content. According to this configuration, the key content is emphasized, and the user can intuitively recognize the position of the contents related to the key content. Further, a content desired by the user can easily be specified by displaying the list information in this way.

In the display processing apparatus 100 according to this embodiment, when the number of contents of which the relation to the key content is to be calculated becomes large, the time taken for the relation calculation time becomes long. As a result, the time taken until content list is displayed becomes long. This may cause psychological stress for users. On the other hand, the psychological stress of the user can be diminished by the transition displayed in animation in which the display of contents other than the selected key content begins to disappear and, after the disappearance of all the contents, contents related to the key content are displayed.

The display processing program executed by the display processing apparatus according to this embodiment may be provided in such a form that it is recorded, in an installable or executable file, on recording media, which are readable by computers, for example, a compact disk read only memory (CD-ROM), a flexible disk (FD), a recordable compact disk (CD-R), and a digital versatile disk (DVD).

Alternatively, the display processing program executed by the display processing apparatus according to this embodiment may be provided in such a form that it is stored on a commuter connected to a network such as the Internet and is downloaded through the network. Further, the display processing program executed by the display processing apparatus according to this embodiment may be provided or distributed through a network such as the Internet.

The program executed by the display processing apparatus according to this embodiment may be provided in such a form that it is recorded, in an installable or executable file, on recording media, which are readable by a computer, for example, a compact disk read only memory (CD-ROM), a flexible disk (FD), a recordable compact disk (CD-R), and a digital versatile disk (DVD).

Alternatively, the program executed by the display processing apparatus according to this embodiment may be provided in such a form that it is stored on a commuter connected to a network such as the Internet and is downloaded through the network. Further, the program executed by the display processing apparatus according to this embodiment may be provided or distributed through a network such as the Internet.

The various modules of the systems described herein can be implemented as software applications, hardware and/or software modules. While the various modules are illustrated separately, they may share some or all of the same underlying logic or code.

While certain embodiments of the inventions have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

**Claims**

1. A display processing apparatus (100) comprising:

   an operation receiver (101) configured to receive operation to select a first key content as a search key;
   a relation calculator (104) configured to calculate first relation between the first key content and each of other contents other than the first key content; and
   a display processor (106) configured to display first list information including first display information of the first key content at a predetermined position and other display information of the each of the other contents other than the first key content at positions corresponding to the first relation, wherein
   the relation calculator (104) calculates second relation between a second key content and each of other contents other than the second key content when the first display information is updated by second display information of the second key content while the first list information being displayed by the display processor, and
   the display processor (106) displays second list information including the other display information of the other contents other than the second key content at positions corresponding to the second relation.

2. The display processing apparatus (100) of Claim 1, wherein, after displaying the display information of the key content at the predetermined position, the display processor (106) displays transition of the other display information of the each of the other contents other than the key content up to a display position determined based on the relation.

3. The display processing apparatus (100) of Claim 2, wherein the display processor (106) displays the transition of the other display information of the each of the other contents other than the key content up to the display position determined based on the relation, in accordance with a predetermined order.

4. The display processing apparatus (100) of Claim 2, wherein the display processor (106) displays substantially simultaneously the transition of the other display information of the each of the other contents other than the key content up to the display position determined based on the relation.

5. The display processing apparatus (100) of Claim 2, wherein
   the display processor (106) displays a first piece of the other display information of the other contents other than the key content in display size larger than display size of the first piece at the position corresponding to the relation, and during the transition up to the position corresponding to the relation, reduces the enlarged display size of the first piece, and wherein
   the display processor (106) displays a second piece of the other display information of the other contents other than the key content in display size smaller than display size of the second piece at the position corresponding to the relation, and during the transition up to the position corresponding to the relation, increases the reduced display size of the second piece.

6. The display processing apparatus (100) of Claim 2, wherein the display processor (106) displays the transition of the other display information of the each of the other contents other than the key content from a display position near frame of a display region up to the display position determined based on the relation.

7. The display processing apparatus (100) of Claims 1, further comprising a detector (109) configured to detect a change of the first key content to the second key content after the first list information is displayed by the display processor (106), wherein
the relation calculator (104) calculates the second relation between the second key content and the each of the contents other than the second key contents when the detector (109) detects the change of the first key content.

8. The display processing apparatus (100) of Claims 1, further comprising a detector (109) configured to detect a change in the other contents other than the first key content, after the first list information is displayed by the display processor (106), wherein
the display processor (106) stops displaying the other display information of the other contents the change of which is detected by the detector (109), and displays transition of the other display information of the other contents the change of which is detected at region where the other display information is stopped to be displayed.

9. A display processing method comprising:

receiving, by an operation receiver (101), operation to select a first key content as a search key;
calculating, by a relation calculator (104), first relation between the first key content and each of other contents other than the first key content; and
displaying, by a display processor (106), first list information including first display information of the first key content at a predetermined position and other display information of the each of the other contents other than the first key content at positions corresponding to the first relation, wherein
the calculating calculates second relation between a second key content and each of other contents other than the second key content when the first display information is updated by second display information of the second key content while the first list information being displayed by the displaying, and
the displaying displays second list information including the other display information of the other contents other than the second key content at positions corresponding to the second relation.

10. The display processing apparatus of Claim 9, wherein, after displaying the display information of the key content at the predetermined position, the displaying displays transition of the other display information of the each of the other contents other than the key content up to a display position determined based on the relation.

11. The display processing apparatus of Claim 10, wherein the displaying displays the transition of the other display information of the each of the other contents other than the key content up to the display position determined based on the relation, in accordance with a predetermined order.

# FIG.1

EP 2 159 722 A1

# FIG.2

```
TITLE:      NOON COMEDY SHOW
CHANNEL:  CHANNEL 00
DATE:       AUG. 1, 2008 12:00-12:40
CAST:       XXXXX, YYYYY
SUBTITLE:  GREAT LINE UP OF COMEDIANS INVITE
               YOU TO ENJOY NOON OF HILARIOUS
               ENTERTAINMENT
GENRE:      COMEDY
```

# FIG.3A

C1

C1-1

C1-2 — L358△*6

# FIG.3B

C1-3      C1

CHANNEL 00

NOON COMEDY SHOW

GREAT LINE UP OF
COMEDIANS INVITE YOU TO
ENJOY NOON OF
HILARIOUS
ENTERTAINMENT

C1-4

C1-5 — 8/1 12:00-12:40

# FIG.4A

# FIG.4B

FIG.5

# FIG.6

# FIG.7

EP 2 159 722 A1

# FIG.8

C1

SMALL  SMALL  SMALL  SMALL  SMALL

SMALL  MEDIUM  MEDIUM  MEDIUM  SMALL

SMALL  MEDIUM  MEDIUM  MEDIUM  SMALL

SMALL  MEDIUM  LARGE  LARGE  LARGE  MEDIUM  SMALL

LARGE

SMALL  MEDIUM  LARGE  LARGE  MEDIUM  SMALL

L358△*6

SMALL  MEDIUM  LARGE  LARGE  MEDIUM  SMALL

LARGE

SMALL  MEDIUM  MEDIUM  MEDIUM  SMALL

SMALL  MEDIUM  MEDIUM  SMALL

SMALL  SMALL  SMALL  SMALL  SMALL

EP 2 159 722 A1

FIG.9

# FIG.10

DISPLAY ONLY DISPLAY INFORMATION OF KEY CONTENTS
1003
1013

DISPLAY INFORMATION OF RELATED CONTENTS ASSEMBLED
1004

1002
1012

PROGRAM GUIDE AND BACKGROUND BEGIN TO DISAPPEAR
1007
1015

LAYOUT COMPLETED
1005

1001 PROGRAM GUIDE

1006
1014

FOCUS TRANSITION

# FIG.11

```
                    ┌──────────┐
                    │  START   │
                    └──────────┘
                          │
          ┌───────────────────────────────┐
          │     DISPLAY CONTENTS LIST      │───S10
          └───────────────────────────────┘
                          │ ◄──────────────────┐
                         S11                    │
                  ╱──────────────╲              │
                 ╱      IS         ╲     NO      │
                ◄ OPERATION SELECTING KEY ──────┘
                 ╲ CONTENT RECEIVED? ╱
                  ╲──────────────╱
                          │ YES
          ┌───────────────────────────────┐
          │ RETRIEVE METADATA OF KEY CONTENT │───S12
          └───────────────────────────────┘
                          │
          ┌───────────────────────────────┐
          │ DISPLAY DISPLAY INFORMATION OF KEY │───S13
          │            CONTENT              │
          └───────────────────────────────┘
                          │
          ┌───────────────────────────────┐
          │ STOP DISPLAYING DISPLAY INFORMATION │───S14
          │       OF OTHER CONTENTS         │
          └───────────────────────────────┘
                          │
          ┌───────────────────────────────┐
          │ RETRIEVE METADATA OF OTHER CONTENTS │───S15
          └───────────────────────────────┘
                          │
          ┌───────────────────────────────┐
          │  CALCULATE RELATION BETWEEN KEY │
          │ CONTENT AND EACH OF OTHER CONTENTS │───S16
          │     FOR EACH ITEM OF METADATA   │
          └───────────────────────────────┘
                          │
          ┌───────────────────────────────┐
          │ DETERMINE, BASED ON RELATION, START │
          │  POSITION OF TRANSITION AND LAYOUT │───S17
          │ POSITION OF DISPLAY INFORMATION OF │
          │          EACH CONTENT           │
          └───────────────────────────────┘
                          │ ◄──────────────────┐
          ┌───────────────────────────────┐    │
          │ CALCULATE POSITION OF EACH DISPLAY │    │
          │ INFORMATION IN CURRENT TRANSITION │───S18
          │             STEP                │    │
          └───────────────────────────────┘    │
                          │                     │
          ┌───────────────────────────────┐    │
          │     GENERATE DISPLAY SCREEN     │───S19
          └───────────────────────────────┘    │
                          │                     │
          ┌───────────────────────────────┐    │
          │     DISPLAY DISPLAY SCREEN      │───S20
          └───────────────────────────────┘    │
                          │                     │
                         S21                    │
                  ╱──────────────╲     NO       │
                 ◄ IS TRANSITION COMPLETED? ──┐  │
                  ╲──────────────╱           │  │
                          │ YES     ┌────────────────────────┐
                          │         │ PROCEED WITH TRANSITION STEP │───S22
                          │         └────────────────────────┘
                    ┌──────────┐
                    │   END    │
                    └──────────┘
```

## FIG.12A

FIG.12B

# FIG.12C

MOVE CURSOR SEVEN SPACES TO RIGHT

C82

C1

L358△*6

L358△*6

SCROLL SEVEN TIMES TO LEFT

MOVEMENT AMOUNT(B)OF DISPLAY INFORMATION OF KEY CONTENT

EP 2 159 722 A1

# FIG.13

TITLE

C83

H×325R

MOVE CURSOR SIX
SPACES UPWARD

MOVE CURSOR SIX
SPACES TO RIGHT

CAST

C1

L358△*6

# FIG.14A

L358△

L358△*6 ↔ L358△*6

# FIG.14B

L358△

L358△*6 ←————→ L358△*6

FIG.15

SCROLL FOUR TIMES TO LEFT

SCROLL FOUR TIMES TO RIGHT

CAST

CS8912S

C81

TITLE

KEYWORD

L358△*6

C1

CAST

TITLE

KEYWORD

GENRE

L358△*6

C1

# FIG.16

START

IS CONTENTS SELECTION OPERATION RECEIVED? —S30

NO

YES

DISPLAY CONTROL OF REPOSITIONING OF INFORMATION LIST —S31

IS OPERATION SELECTING CONTENT RECEIVED? —S32

NO

YES

SCROLL LIST INFORMATION IN OPERATION DIRECTION —S33

DISPLAY SPECIFIED DISPLAY INFORMATION IN LARGER SIZE —S34

IS INITIAL DISPLAY POSITION OF DISPLAY INFORMATION OF KEY CONTENT MOVED OUTSIDE DISPLAY RANGE? —S35

NO

YES

DISPLAY DISPLAY INFORMATION OF KEY CONTENT WITH INDICATION INDICATING INITIAL DISPLAY POSITION —S36

IS THERE CHANGE IN NUMBER OF ITEMS IN DISPLAY RANGE? —S37

NO

YES

CHANGE DISPLAY OF ITEMS ACCORDING TO CHANGE —S38

## FIG.17

FIG.18

# FIG.19

FIG.20

EP 2 159 722 A1

# FIG.21

# FIG.22

2201

2202

TRANSITION BEGIN
SIMULTANEOUSLY

TRANSITION END
SIMULTANEOUSLY

# FIG.23

# FIG.24

AFTER
2 SEC

0

AFTER
0.5 SEC

2401

AFTER
0.5 SEC

AFTER
1 SEC

AFTER
2 SEC

AFTER
1 SEC

AFTER
1.5 SEC

AFTER
1.5 SEC

2402

# FIG.25

# FIG.26

OBSERVING POINT
2601

2602

2603

# FIG.27

2701

2702

# FIG.28

OBSERVING POINT
2801

2803

2802

# FIG.29

# FIG.30

3003

3004

3001
OBSERVING POINT

3002

# FIG.31

3101

3102

CHANNEL A
NIGHT COMEDY

3112

CHANNEL B
(BROADCASTING)
OYAMA DRAMA B
DRAMA

3111

CHANNEL A
NIGHT COMEDY

3114

CHANNEL B
(BROADCASTING)
OYAMA DRAMA B
DRAMA

3113

EP 2 159 722 A1

# FIG.32

EP 2 159 722 A1

# FIG.33

START

DISPLAY CONTENTS LIST ⎯⎯ S3301

IS CHANGE IN
KEY CONTENT DETECTED? ⎯ S3302 — NO

YES

RETRIEVE METADATA OF NEXT KEY CONTENT ⎯⎯ S3303

DISPLAY DISPLAY INFORMATION OF
KEY CONTENT ⎯⎯ S3304

STOP DISPLAYING DISPLAY INFORMATION OF
OTHER CONTENTS ⎯⎯ S3305

RETRIEVE METADATA OF OTHER CONTENTS ⎯⎯ S3306

CALCULATE RELATION BETWEEN EACH OF
OTHER CONTENTS AND KEY CONTENT FOR EACH
ITEM OF METADATA ⎯⎯ S3307

DETERMINE, BASED ON RELATION, START
POSITION OF TRANSITION AND LAYOUT POSITION
OF DISPLAY INFORMATION OF EACH CONTENT ⎯⎯ S3308

CALCULATE POSITION OF EACH DISPLAY
INFORMATION IN CURRENT TRANSITION STEP ⎯⎯ S3309

GENERATE DISPLAY SCREEN ⎯⎯ S3310

DISPLAY DISPLAY SCREEN ⎯⎯ S3311

IS TRANSITION COMPLETED? ⎯ S3312 — NO

PROCEED WITH TRANSITION STEP ⎯ S3313

YES

END

# FIG.34

# FIG.35

```
                    ┌──────────────┐
                    │    START     │
                    └──────┬───────┘
                           │      ┌──────────────────────────┐
                           ▼      │                          │
                      S3501       │                          │
              ╱─────────────────╲ │                          │
             ╱  IS CHANGE IN      ╲│   NO                     │
             ╲    CONTENT         ╱──────────────────────────┘
              ╲   DETECTED?     ╱
               ╲───────┬───────╱
                       │ YES
                       ▼
        ┌──────────────────────────────────┐
        │  DETERMINE TRANSITION PATH FOR    │
        │  DISPLAY INFORMATION OF CONTENT   │── S3502
        │  TO BE TRANSITION TARGET          │
        └──────────────┬───────────────────┘
                       ▼                          ┌──────────┐
        ┌──────────────────────────────────┐      │          │
        │  CALCULATE POSITION OF EACH       │      │          │
        │  DISPLAY INFORMATION IN CURRENT   │── S3503          │
        │  TRANSITION STEP                  │      │          │
        └──────────────┬───────────────────┘      │          │
                       ▼                           │          │
        ┌──────────────────────────────────┐      │          │
        │  GENERATE DISPLAY SCREEN          │── S3504          │
        └──────────────┬───────────────────┘      │          │
                       ▼                           │          │
        ┌──────────────────────────────────┐      │          │
        │  DISPLAY DISPLAY SCREEN           │── S3505          │
        └──────────────┬───────────────────┘      │          │
                       ▼                           │          │
                   S3506                           │          │
          ╱─────────────────────╲    NO            │          │
         ╱  IS TRANSITION         ╲─────────┐      │          │
         ╲   COMPLETED?           ╱         ▼      │          │
          ╲──────────┬──────────╱    ┌─────────────────────┐  │
                     │ YES           │  PROCEED WITH       │──┘ S3507
                     ▼               │  TRANSITION STEP    │
              ┌──────────────┐       └─────────────────────┘
              │     END      │
              └──────────────┘
```

55

Europäisches
Patentamt

European
Patent Office

Office européen
des brevets

## EUROPEAN SEARCH REPORT

Application Number

EP 09 15 8095

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 785 814 A (SQUARE ENIX KK TRADING CO LTD [JP]) 16 May 2007 (2007-05-16) * abstract; figure 3 * * paragraph [0067] * * paragraph [0146] - paragraph [0147]; figure 11 * * paragraph [0154] * ----- | 1-11 | INV. G06F17/30 |
| A | EP 1 513 341 A (SAMSUNG ELECTRONICS CO LTD [KR]) 9 March 2005 (2005-03-09) * abstract; figure 4A * ----- | 1,9 | |
| A | HUAN-BO LUAN ET AL: "Interactive Spatio-Temporal Visual Map Model for Web Video Retrieval" MULTIMEDIA AND EXPO, 2007 IEEE INTERNATIONAL CONFERENCE ON, IEEE, PI, 1 July 2007 (2007-07-01), pages 560-563, XP031123686 ISBN: 978-1-4244-1016-3 * abstract * * page 562, right-hand column, line 1 - line 21 * ----- | 1,9 | TECHNICAL FIELDS SEARCHED (IPC) H04N G06F |

The present search report has been drawn up for all claims

| Place of search | Date of completion of the search | Examiner |
|---|---|---|
| Munich | 4 January 2010 | Deane, Inigo |

## ANNEX TO THE EUROPEAN SEARCH REPORT
## ON EUROPEAN PATENT APPLICATION NO.

EP 09 15 8095

This annex lists the patent family members relating to the patent documents cited in the above-mentioned European search report.
The members are as contained in the European Patent Office EDP file on
The European Patent Office is in no way liable for these particulars which are merely given for the purpose of information.

04-01-2010

| Patent document cited in search report | | Publication date | Patent family member(s) | | Publication date |
|---|---|---|---|---|---|
| EP 1785814 | A | 16-05-2007 | JP<br>US | 2007122496 A<br>2007106949 A1 | 17-05-2007<br>10-05-2007 |
| EP 1513341 | A | 09-03-2005 | CN<br>JP<br>KR<br>US | 1592376 A<br>2005080282 A<br>20050023704 A<br>2005076361 A1 | 09-03-2005<br>24-03-2005<br>10-03-2005<br>07-04-2005 |

EPO FORM P0459

For more details about this annex : see Official Journal of the European Patent Office, No. 12/82

**EP 2 159 722 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001292383 A